(19) **Europäisches Patentamt / European Patent Office / Office européen des brevets**

(11) **EP 4 765 753 A1**

(12) **EUROPEAN PATENT APPLICATION**

(43) Date of publication:
24.06.2026 Bulletin 2026/26

(21) Application number: 25215201.2

(22) Date of filing: 12.11.2025

(51) International Patent Classification (IPC):
H04L 41/0654 (2022.01)  H04L 41/5025 (2022.01)
H04L 41/5067 (2022.01)  H04W 24/02 (2009.01)
H04W 24/04 (2009.01)  H04L 12/18 (2006.01)
H04B 17/309 (2015.01)  H04W 4/80 (2018.01)
H04L 41/0631 (2022.01)  H04L 51/224 (2022.01)
H04L 41/142 (2022.01)  H04L 41/147 (2022.01)
H04L 41/16 (2022.01)  H04L 41/5009 (2022.01)
H04L 41/50 (2022.01)  H04L 43/08 (2022.01)

(52) Cooperative Patent Classification (CPC):
H04W 24/02; H04B 17/318; H04B 17/3913;
H04L 12/1827; H04L 12/189; H04L 41/0631;
H04L 41/0654; H04L 41/5025; H04L 41/5067;
H04W 4/80; H04W 24/04; H04L 41/142;
H04L 41/147; H04L 41/16; H04L 41/5009;  (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.12.2024 US 202418987127

(71) Applicant: INTEL Corporation
Santa Clara, CA 95054 (US)

(72) Inventors:
• Singh, Balvinder Pal
490020 Bhilai (IN)

• Guetta, Kobi
4225828 Netanya (IL)
• Kahana, Yoni
Kfar Hess (IL)
• Israel, Amichay
32207 Haifa HA (IL)
• Apsel, Ehud
7683400 Sitria (IL)
• David, Anubhav
761002 Gopalpur, Odisha (IN)
• Kamhi, Gila
30900 Zichron Yaakov HA (IL)

(74) Representative: Goddar, Heinz J.
Boehmert & Boehmert
Anwaltspartnerschaft mbB
Pettenkoferstrasse 22
80336 München (DE)

(54) **METHODS AND ARRANGEMENTS TO BOOST WIRELESS MEDIA QUALITY**

(57)  Logic may monitor quality of communication of data to a wireless receiver device based on transport characteristics at a wireless source device. Logic may evaluate the transport characteristics to identify indication(s) of a problem with the quality of the communication. Logic may identify a root cause associated with the indication(s). Logic may associate the root cause with one or more actions to mitigate the degradation of the quality. And logic may cause performance of an operation to mitigate the degradation of the quality based on the one or more actions. The logic to evaluate the transport characteristics may determine an upper limit for an achievable mean opinion score (MOS) based on the transport characteristics; and, based on the upper limit for the achievable MOS being less than a threshold MOS, may identify the indication(s) associated with the upper limit for the achievable MOS.

FIG. 2

(Cont. next page)

(52) Cooperative Patent Classification (CPC): (Cont.)
H04L 41/509; H04L 43/08; H04L 51/224

**Description**

## BACKGROUND

Wireless Media Protocol specifications including Bluetooth®, Wi-Fi, and others, provide a set of rules to be used by all the endpoints, including the source of data and destination(s) of the data. For example, the Bluetooth® specification provides rules to transmit and receive audio streams for computers, servers, mobile devices, or the like, as, e.g., streaming endpoints and Wireless Earbuds, Wireless Headsets/Neckbands, or other speakers as wireless receivers, but after integration into a final solution, there are dynamics of environment, difference of timings, buffer conditions, air conditions and other factors, directly or indirectly impacting the audio quality.

## BRIEF DESCRIPTION OF THE DRAWINGS

FIG. 1A depicts a system diagram illustrating an embodiment of a network environment for media logic circuitry, in accordance with one or more example embodiments.
FIG. 1B depicts an embodiment of a system including multiple devices to implement media logic circuitry, in accordance with one or more example embodiments.
FIG. 1C illustrates an embodiment of a radio architecture for STAs, such as the wireless interfaces for STAs depicted in FIGs. 1A-B, to implement media logic circuitry.
FIG. 1D illustrates an embodiment of front end module (FEM) circuitry of a wireless interface for STAs, such as the STAs in FIGs. 1A-B, to implement media logic circuitry.
FIG. 1E illustrates an embodiment of radio integrated circuit (IC) circuitry of a wireless interface for STAs, such as the STAs in FIGs. 1A-B, to implement media logic circuitry.
FIG. 1F illustrates an embodiment of baseband processing circuitry of a wireless interface for devices, such as the devices in FIGs. 1A-B, to implement media logic circuitry.
FIG. 2 depicts an embodiment of an interaction diagram to implement media logic circuitry.
FIG. 3A-3E depict an embodiment of a Bluetooth® system and lab-experiments to implement media logic circuitry.
FIGs. 4A-B depicts embodiments of flowcharts to implement media logic circuitry.
FIG. 5 depicts an embodiment of a functional diagram of a wireless communication device, in accordance with one or more example embodiments of the present disclosure.
FIG. 6 depicts an embodiment of a block diagram of a machine upon which any of one or more techniques may be performed, in accordance with one or more embodiments.
FIGs. 7-8 depict embodiments of a computer-readable storage medium and a computing platform to implement media logic circuitry.

## DETAILED DESCRIPTION OF EMBODIMENTS

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Embodiments may enhance wireless communication (e.g. Bluetooth® (BT), Wi-Fi, and/or the like) via proposed methods and arrangements to detect whether the system or the user faced any impact on medium data quality and, if so, automatically implement corrections and/or recommend to the user actionable steps to boost the quality of medium data with simple actions. In some embodiments, media logic circuitry of a wireless source device may monitor transport statistics, or transport characteristics, to identify symptoms, or indications, of degradation of a quality of communication of data, identify a root cause based on the symptoms, associate the root cause with one or more actions to mitigate the degradation, and cause performance of an operation to mitigate the degradation of the quality. The media logic circuitry may comprise circuitry that is configured to perform functionality based on an arrangement of circuits in the circuitry and/or by processing instructions of code with processing circuitry of a processor. The transport characteristics refers to statistics/counters of important values or statistics while crossing any interfaces in the given context. For example, transport statistics, transport indications, or transport characteristics may be important values or statistics related to data quality while crossing between a Wi-Fi/Network to the audio to a BT controller to the air and vice versa.

Some embodiments may estimate, non-intrusively and in real-time, the quality of experience of wireless media (audio, video, or both) sessions in terms of Achievable Mean Opinion Score (MOS) scores from the wireless source side, by monitoring the transport layer and low-level (or lower layer) radio statistics. This is a technical novelty that requires (a) the development of real-time wireless transport layer and low-level radio report mechanism, (b) a careful curation of lab experiments that simulate wireless scenarios and measure respective media quality scores and (c) the training of a machine-learning model such as a statistical model, a neural network, or the like.

With this solution, users may (a) be notified of wireless-related media issues in real-time and for any use, (b) rank issues by severity, and (c) eliminate the need for media capture, which is typically needed for voice and video quality estimations.

One method of evaluating the quality of experience in Voice over Internet Protocol (IP), Wi-Fi voice applications, and BT voice applications, is to measure the MOS of the media quality to determine a MOS score. The MOS score has been traditionally obtained by conducting repeated voice sessions with human participants, under identically reproduced conditions, who in turn submit an evaluation rating based on their subjective experience. The ratings range from 1 to 5 denoting the experience as (1) Bad, (2) Poor, (3) Fair, (4) Good, or (5) Excellent. The MOS score is then computed as the mean of all ratings.

$$MOS = \left( \sum i \llbracket rating\_i \rrbracket \right) / (num\ of\ ratings)\ , rating\_i \in \{1,2,3,4,5\}$$

More recent advancements have allowed the mobile and IP-based industries to transition from human-centered MOS scores to algorithmically evaluated MOS. Such an algorithm was standardized by the Perceptual Objective Listening Quality Assessment (POLQA). In essence, POLQA replaces the human participants' ratings of voice quality by an algorithm that compares the original and the received signals, applies a series of computational steps, and eventually estimates the MOS score.

However, for everyday voice sessions with arbitrary participants, obtaining MOS scores remains a challenge. To measure the MOS (or in this case, POLQA MOS) in a way that is non-intrusive, one would need to put in place a framework that coordinates the recording and collection of audio signals from call participants of both ends while making sure that the solution is automated, non-intrusive and scales well to support the growing number of voice call/conference applications.

Alternatively, AI-based methods that require no such coordinating frameworks are a subject of academic study and have yet to be largely adopted by the industry. Such methods not only require real-time audio capture and are computation-heavy (for their Neural-Networks (NNs)), but also must be validated for accuracy and robustness in real-world environments.

In contrast, many embodiments discussed herein may monitor the wireless source (e.g., BT host, Wi-Fi host, or the like) side of the media session and detect a deterioration in medium data quality that stems from the wireless receiver (e.g., BT connectivity, Wi-Fi connectivity, or the like) side. Some embodiments may do so by estimating an upper limit (or maximum score) for MOS media quality (e.g., an achievable MOS) based on transport layer protocol statistics and low-level radio statistics, rather than processing relayed media. As such, many embodiments do not aim to determine an end-to-end MOS, but rather to notify users of media issues noticeable at the wireless source side.

Prior to the embodiments described herein, decreasing the audio quality may lead to disconnection. The user might try to guess the problem and guess how to improve the audio quality (e.g. get closer to a wireless source device such as a laptop).

Previous MOS estimation solutions that rely on Bluetooth® or Wi-Fi transport characteristics are non-existent, to the best of our knowledge. Such embodiments described herein are entirely novel in that aspect. Further, since prior solutions are unaware of the transport layer statistics, the prior solutions, by definition, cannot be used for the purpose of detecting specific issues at the wireless source device (BT, Wi-Fi, or the like).

In the VoIP domain, applications such as Microsoft® Teams can notify users of bad connectivity periods that affect voice quality. This type of alerting mechanism is conducted by monitoring the Real-Time Protocol (RTP) transport layer that is carried over UDP/IP packets. Nevertheless, in-spite of continuously monitoring the transport layer (much like our solution), a direct estimation of MOS is never attempted. This is not entirely surprising, since, as we demonstrate in a following section, converting transport layer statistics to a MOS is quite challenging.

Lastly, as mentioned, MOS estimations that are audio-reliant either require a highly controlled environment for audio collection and comparison from both ends, or are still a subject of academic study and have yet to be widely adopted. Hence such controlled environments can only be created in the labs and are restricted to lab test arenas alone.

Many embodiments described herein may identify the root cause that led to quality loss and, based on heuristics, provide an actionable indication to the user of what should be done to boost the quality of the media (audio, screen sharing and/or video data).

Root cause detection may be based on a cumulative activity of connectivity (BT, Wi-Fi, Network) stats and the remote and operating system (OS) indicators to increase accuracy in symptomizing the problems faced by users.

Embodiments described herein may, e.g., recommend that the user take one or more specific actions associated with one or more symptoms (or indications) of degraded media, to instruct the user how to improve the connectivity and/or media quality.

Some embodiments described herein include a framework for employing a statistical or machine learning model that processes aggregated statistics (every 5, 2, or 1 seconds or the like) from a transport layer (and lower-level radio layers) to estimate a well-calibrated upper limit for the MOS.

For instance, the statistical or machine learning model may determine or infer a respective limit for a MOS (Bad, Fair, Good, etc.) for media quality, determine the MOS is beneath a calibrated threshold (e.g., by comparing the limit for the MOS to the calibrated threshold), and classify a media quality, for example, as sub-par. In such situations, the statistical or machine learning model may mark the media quality issue as a wireless source device related issue (BT-related, Wi-Fi-related, and/or the like).

Advantages of some embodiments may be realized by providing a user indication on a degraded connection quality, media quality (audio and/or video jitter/losses), and other user experience (UX) impacting issues. Precise recommendations may be based on the counters/inferences performed in real-time on the wireless source device and the user may take some specific actions like moving closer to the wireless source device, not moving into areas of the radio congestion, charge a battery of the wireless receiver device or wireless source device, change batteries in the wireless receiver device or wireless source device, upgrade firmware, close CPU consuming applications, switch network protocol, switch channels, switch to different wireless source device or a different wireless receiver device, and/or the like.

Advantages of some embodiments may include a native component in the host side applications, and may be packaged as part of a connectivity performance and analytics package. Embodiments are not limited to these examples. Such embodiments may allow an enhanced user experience for video/audio conference by quickly identifying media issues or subpar intervals in a call and notifying the user accordingly. Triggered by this notification, additional features are planned to enrich the notification with root-causes and a generative AI based API.

In many embodiments, the connectivity issue detection may be unintrusive and computationally lightweight, as it relies on statistics rather than on captured media and, thus, facilitates a straightforward machine learning model or statistical model solution.

Embodiments may comprise media logic circuitry to facilitate communications by devices in accordance with Bluetooth® specifications such as Bluetooth® Core specifications 5.0, as well as older Bluetooth® specifications such as 3.0, 4.0, and Bluetooth® low energy (LE) specifications. Many embodiments also facilitate communications by devices in accordance with different (Wi-Fi) versions of Institute of Electrical and Electronics Engineers (IEEE) 802.11 standards for wireless communications such as IEEE 802.11-2020, December 2020; IEEE P802.11be™/D5.1, March 2024; IEEE P802.11ax™-2021, IEEE P802.11ay™-2021, IEEE P802.11az™/D3.0, IEEE P802.11ba™-2021, IEEE P802.11bb™/D0.4, IEEE P802.11bc™/D1.02, and IEEE P802.11bd™/D1.1.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

Various embodiments may be designed to address different technical problems associated with improving media quality such as determining symptoms or indications of a degradation in communication of data, identifying a root cause of the degradation, associating the root cause with a set of one or more actions, causing performance of an operation to mitigate the degradation, determining or estimating a MOS without recording and collection of audio signals from call participants of both ends; determining or estimating a MOS with an automated solution; determining or estimating a MOS with a non-intrusive solution; determining a MOS in a manner that can scale to support the growing number of voice call/audio-streaming/conference applications; creating a statistical model to estimate a MOS; training a machine-learning model to estimate a MOS; determining and communicating specific actions to improve media quality; and/or the like.

Different technical problems such as those discussed above may be addressed by one or more different embodiments. Embodiments may address one or more of these problems associated with improving media quality. For instance, some embodiments that address problems associated with improving media quality may do so by one or more different technical means, such as, causing transmission of medium data to the wireless receiver device via the channel; monitoring quality of communication of the medium data to the wireless receiver device based on transport characteristics at the wireless source device; evaluating the transport characteristics to determine symptoms or indications of degradation of a quality of communication of data; determining an upper limit for an achievable mean opinion score (MOS) based on the quality of communication of the medium data; detecting a degradation of the quality at the wireless receiver device based on the MOS; causing performance of an operation to indicate a detected degradation of the quality; creating a statistical model to estimate a MOS based on transport layer statistics and lower layer statistics; training a machine learning model based on transport layer statistics and lower layer statistics; identifying a root cause of one or more media quality issues based on transport layer statistics and lower layer statistics and information; associating the root cause with one or more specific actions that address the root cause; communicating an indication of the one or more specific actions to a user to allow a user to address the root cause of the media quality issue(s); and/or the like.

Several embodiments comprise central servers, access points (APs), and/or stations (STAs) such as modems, routers, switches, servers, workstations, netbooks, mobile devices (Laptop, Smart Phone, Tablet, and the like), sensors, meters, controls, instruments, monitors, home or office appliances, Internet of Things (IoT) gear (watches, glasses, headphones, and the like), and the like. Some embodiments may provide, e.g., indoor and/or outdoor "smart" grid and sensor services. In various embodiments, these devices relate to specific applications such as healthcare, home, commercial office and retail, security, and industrial automation and monitoring applications, as well as vehicle applications (automobiles, self-driving vehicles, airplanes, and the like), and the like.

Some embodiments may facilitate wireless communications in accordance with multiple standards like Bluetooth®®, cellular communications, and messaging systems. Furthermore, some wireless embodiments may incorporate a single antenna while other embodiments may employ multiple antennas or antenna elements.

While some of the specific embodiments described below will reference the embodiments with specific configurations, those of skill in the art will realize that embodiments of the present disclosure may advantageously be implemented with other configurations with similar issues or problems.

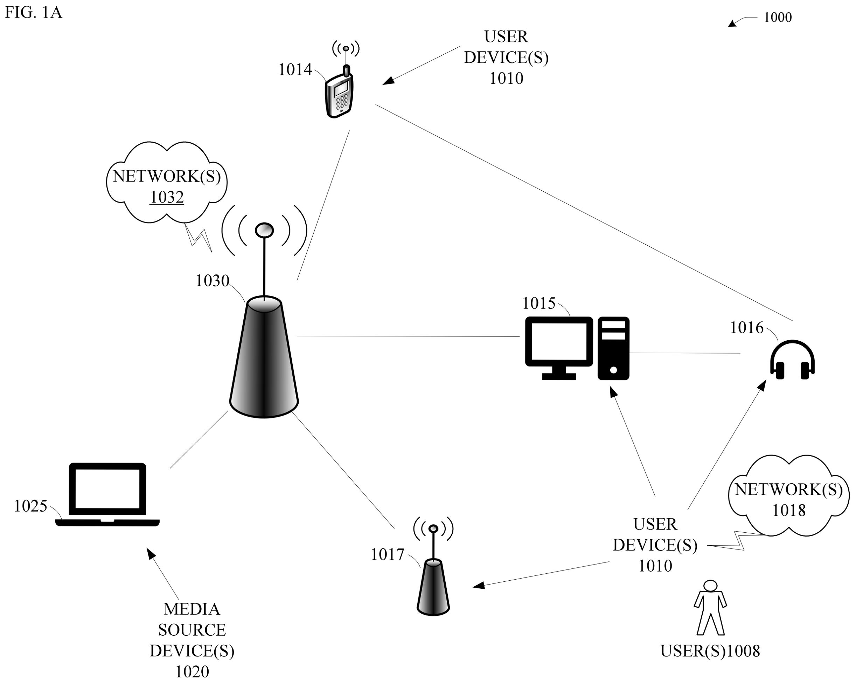

FIG. 1A depicts a system diagram illustrating an embodiment of a network environment for media logic circuitry, in accordance with one or more example embodiments. Wireless network 1000 may include one or more user device(s) 1010 and one or more access points(s) (AP) or base stations 1030, which may communicate in accordance with Bluetooth® communication standards and/or IEEE 802.11 communication (Wi-Fi) standards. The user device(s) 1010 may comprise mobile devices that are non-stationary (e.g., not having fixed locations) and/or stationary devices.

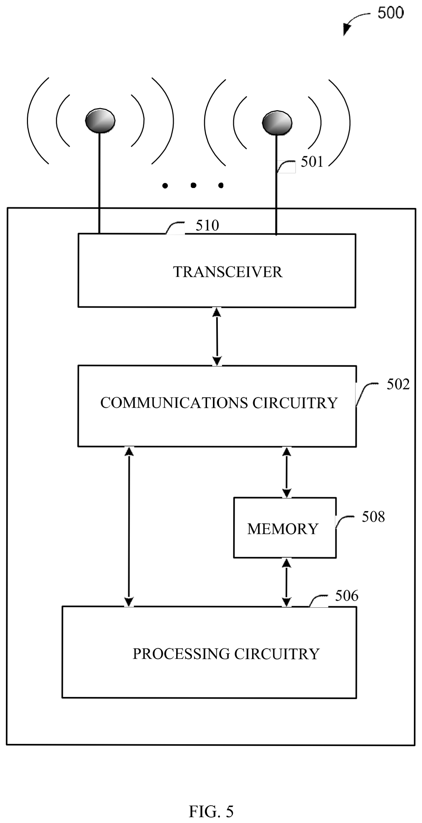

In some embodiments, the user device(s) 1010, the laptop computer 1025, and the base station 1030 may include one or more computer systems similar to the example machine/system of FIGs 5, 6, 7, and 8.

One or more illustrative user device(s) 1010, the laptop computer 1025, and/or base station 1030 may be operable by one or more user(s) 1008. It should be noted that any addressable unit may be a station (STA). A STA may take on multiple distinct characteristics, each of which shape its function. For example, a single addressable unit might simultaneously be a Bluetooth® low energy (BLE) STA, portable STA, a quality-of-service (QoS) STA, a dependent STA, and a hidden STA. The one or more illustrative user device(s) 1010 and the base station 1030 may be STAs. The one or more illustrative user device(s) 1010 and/or base station 1030 may operate as an extended service set (ESS), a basic service set (BSS), a personal basic service set (PBSS), or a control point/access point (PCP/AP). The user device(s) 1010 (e.g., 1014, 1015, 1016, and 1017) and/or the base station 1030 may include any suitable processor-driven device including, but not limited to, a mobile device or a non-mobile, e.g., a static device. For example, user device(s) 1010 and/or base station 1030 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook™ computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless network interface, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth® identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

In some embodiments, the user device(s) 1010 and/or base station 1030 may also include mesh stations in, for example, a mesh network, in accordance with one or more IEEE 802.11 standards and/or 3GPP standards.

Any of the user device(s) 1010 (e.g., user devices 1014, 1015, 1016, and 1017) , the laptop computer 1025, and the base station 1030 may be configured to communicate with each other via one or more communications network(s) 1032 and/or 1018 wirelessly or by wired connections. In some embodiments, the user device(s) 1010 may also communicate peer-to-peer or directly with each other, e.g., via Bluetooth®, without the base station 1030.

Any of the communications network(s) 1032 and/or 1018 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications network(s) 1032 and/or 1018 may have any suitable communication range associated therewith and may include, for example, global networks (e.g., the Internet), metropolitan area networks (MANs), wide area networks (WANs), local area networks (LANs), or personal area networks (PANs). In addition, any of the communications network(s) 1032 and/or 1018 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 1010 (e.g., user devices 1014, 1015, 1016, and 1017), the laptop computer 1025, and base station 1030 may include one or more communications antennas. The one or more communications antennas may be any suitable type of antennas corresponding to the communications protocols used by the user device(s) 1010 (e.g., user devices 1014, 1015, 1016, and 1017) and the base station 1030. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user device(s) 1010 and/or the base station 1030.

Any of the user device(s) 1010 (e.g., user devices 1014, 1015, 1016, and 1017), the laptop computer 1025, and the base station 1030 may be configured to wirelessly communicate in a wireless network. Any of the user device(s) 1010 (e.g., user devices 1014, 1015, 1016, and 1017), the laptop computer 1025, and the base station 1030 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 1010 (e.g., user devices 1014, 1015, 1016, and 1017), the laptop computer 1025, and the base station 1030 may be configured to perform any given directional transmission towards one or more defined transmit sectors. Any of the user device(s) 1010 (e.g., user devices 1014, 1015, 1016, and 1017), the laptop computer 1025, and the base station 1030 may be configured to perform any given directional reception from one or more defined receive sectors.

MIMO beamforming in a wireless network may be accomplished using RF beamforming and/or digital beamforming. In some embodiments, in performing a given MIMO transmission, user device(s) 1010, the laptop 1025, and/or base station 1030 may be configured to use all or a subset of its one or more communications antennas to perform MIMO beamforming.

Any of the user device(s) 1010 (e.g., user devices 1014, 1015, 1016, and 1017), the laptop computer 1025, and the base station 1030 may include any suitable radio and/or transceiver for transmitting and/or receiving radio frequency (RF) signals in the bandwidth and/or channels corresponding to the communications protocols utilized by any of the user device(s) 1010, the laptop computer 1025, and AP(s) 1005 to communicate with each other. The radio components may include hardware and/or software to modulate and/or demodulate communications signals according to pre-established transmission protocols. The radio components may further have hardware and/or software instructions to communicate via Bluetooth® protocols such as Bluetooth® 5.0 or may communicate via one or more Wi-Fi and/or Wi-Fi direct protocols, as standardized by the Institute of Electrical and Electronics Engineers (IEEE) 802.11 standards. The radio component may include any known receiver and baseband suitable for communicating via the communications protocols. The radio component may further include a power amplifier (PA), a low noise amplifier (LNA), additional signal amplifiers, an analog-to-digital (A/D) converter, one or more buffers, and a digital baseband.

The user device(s) 1010 may include, e.g., a mobile phone 1014 operating on a Bluetooth® (BT) channel or a Wi-Fi channel that act as wireless source devices and/or wireless receiver devices. The wireless network 1000 may also include media source device(s) 1020 such as the laptop computer 1025. The media source device(s) 1020 may comprise a service provider for, e.g., streaming audio services, streaming video services, or a combination thereof.

In the present embodiment, the laptop computer 1025 may comprise an audio streaming service of a service provider. In several embodiments, the mobile device 1014 and/or the desktop computer 1015 may subscribe with the service provider to receive a streaming audio service for, e.g., music, podcasts, webcast, and/or the like.

The laptop computer 1025 may transmit streaming audio data to the base station 1030 and destined for the mobile device 1014 to provide streaming audio to a user 1008. In some embodiments, the laptop computer 1025 may have a wired connection with the base station 1030, the base station 1030 may have a wireless connection with the mobile phone 1014 and the user may listen to the streaming audio via a wireless headset 1016 via the mobile device 1014. Based on this situation, the base station 1030 may act as a wireless source device for data streaming to the mobile device 1014, which acts as a wireless receiver device, and the mobile device 1014 may act as a wireless source device for the data streaming to the wireless headset 1016, which acts as a wireless receiver device. Note that in conference call situations, each device associated with a wireless link may act as a wireless source device for media data transmitted from that device and a wireless receiver device for data received by that device.

In the present embodiment, for example, the mobile device 1014 may connect with the wireless headset 1016 via a BT link to communicate data of the data streaming service from the mobile device 1014 to the wireless headset 1016. In such embodiments, the mobile device 1014 may receive streaming data and retransmit the streaming data to the headset 1016.

As a wireless source device, the mobile device 1014 may include media logic circuitry to monitor transport characteristics related to a quality of communication of data to the wireless receiver device, the wireless headset 1016. In some embodiments, the wireless headset 1016 may also comprise media logic circuitry to cause transmission of transport characteristics from the wireless headset perspective to the mobile device 1014 to facilitate monitoring of the receiver side transport characteristics.

Based on the transport characteristics collected from the transmitter side and transport characteristics collected from the receiver side, the media logic circuitry of the mobile device 1014 may evaluate the transport characteristics against heuristic data in memory of the mobile device 1014 or accessible via the network 1032 to determine symptoms, or indications, of degradation of the quality of communication of data to the wireless headset 1016. Based on the indications of degradation and the heuristic data, the media logic circuitry of the mobile device 1014 may determine a root cause of the indications of degradation and determine to associate a set of actions for mitigation of the degradation with the root cause of the degradation. After determining the set of actions, the media logic circuitry of the mobile device 1014 may automatically perform one or more of the actions to mitigate the degradation, automatically notify the user with an indication regarding performance degradation, and automatically provide a recommendation to the user for improvement in the Bluetooth® (BT) connection automatically. In some embodiments, the media logic circuitry of the mobile device 1014 may identify the problem, analyze the root cause that caused it, and then provide a concrete recommendation to the user. Note that this process is not limited to BT connections but may also be performed with Wi-Fi connections or other wireless connections.

## DETECTION OF THE SYMPTOMS (INDICATIONS) OF A MISBEHAVIOR

There are many symptoms (or factors or indications) that could affect the wireless link quality during, e.g., an ongoing voice-over-IP (VoIP) call. These factors are generally very dynamic in nature. At all interfaces there may be issues such as (embodiments are not limited to these examples):

- Networking Issues on backend (Wi-Fi/Network/Server)

- Bluetooth® Radio local and Remote

- Environmental factors on Radio

- Other scenarios (details in the next sections)

Table 1 describes some examples of symptoms and techniques for evaluation of the symptoms for detection of issues that may impact user experience in reception of streaming data:

| Table 1: | |
| --- | --- |
| **Factors** | **Counters and Evaluation Techniques** |
| Accessory side issues | • Accessory data for Battery, number of Negative Acknowledgements per retry slot (NAKs), Number of positive acknowledgements per retry slot(ACKs), from air |
| Environmental Factors | • Accessory alone in the bad radio conditions<br>• Conditions on the remote accessory side in terms of bugs<br>• Example, Radio congestions due to same technology radios or other interfering radios<br>• Noise in the environment |
| Transmission / Reception power of the packets over the radio | • Packets errored in the Transmit direction<br>• Packets errored in the Received direction<br>• Both |
| Number of Retransmissions | • This is to add the protocol resilience of trying again to transmit till the last agreed retry |
| Buffer conditions at the Host side | • Packets shall get dropped on either side's receivers after all retries are exhausted<br>• Data Buffer Underflow/ Data Buffer Overflows/ Packet corruptions during transit /Packets arriving late due to clock drifts etc, early arrivals due to clock mismatches etc. |
| Buffer conditions in the Radio side | • Underflow/Overflow/Wrong packets/Late packets etc. |
| Network conditions (Wi-Fi or wired)/ Call Server problems | • Similar to the above<br>• Network or Wi-Fi PER / RSSI and conditions of packet losses |
| Internal radio issues | • Prioritization of media packets, Air Bandwidth availability |
| Latency | • Other Scheduling issues, Connectivity issues etc.<br>• Air latency (latency in receiving the packet correctly on Remote end and then acknowledging back to the local end) or Round trip time over the air.<br>• Packets Transmit timing out (Flushed) |

## BOOSTING THE QUALITY BASED ON THE REAL CAUSE ESTIMATED

Upon detection of any misbehavior or an abnormality in either the current state of ongoing transfers or dynamic changes in the values of some counters or other markers for symptoms/indications of degradation, the media logic circuitry of the mobile device 1014 (wireless source device) may automatically address the issues by associating the issues with the root cause of the symptoms/indications, with a set of one or more actions to mitigate the root cause of the symptoms/indications, and, in many embodiments, informing the user by displaying and/or announcing one or more actions with high level mitigations towards boosting the quality.

## Types of Mitigation

With respect to automatic mitigation, the media logic circuitry of the mobile device 1014 (the wireless source device) may automatically perform one or more of the actions in the set of actions that can be performed without user participation. For instance, if a root cause of a symptom is a transmission power at the mobile device 1014 and/or reception power setting at the wireless headset 1016, the media logic circuitry of the mobile device 1014 may communicate with the wireless headset 1016 to negotiate an increase in the reception power and/or boost the transmission power setting for the mobile device 1014.

For actions that require user participation to mitigate the root cause of the symptoms, the media logic circuitry of the mobile device may communicate the user recommendations to perform the actions based on the specific problematic symptoms detected by the media logic circuitry.

Table 2 shows the information to be provided (not limited to this) to the end users so that some actionable tasks may be done by the users:

**TABLE 2**

| Impact on the user | Problem Symptoms/Indications Detected | User Recommendations |
| --- | --- | --- |
| • Slow Bluetooth® Activity<br><br>• Audio glitches during streaming/call | CPU Loaded condition | Close some CPU Consuming applications |
| • Congestion causing audio glitches/link drops | Radio Congestion Detected | Alert: entering the radio congestion zone - move backward (out of the congestion zone) if needed |
| • Remote connection jittery | Low Battery thresholds detected | Alert: recharge the headset/remove device(s) |
| • Headset jittery during call | May be phone is also connected to the same headset as another computer | Alert: If phone and computer are both connected and used with Headset - disconnect the phone or computer from the Headset |
| • Audio glitchy while moving far | User moving to far away from the phone (wireless source device) for wireless link - close to threshold | Alert: move closer to phone in order to avoid disconnection of the Bluetooth® link, Wi-Fi link, or other wireless link |
| • Network Causing audio issues | User cannot hear others, or he could not be heard or both | Alert: switch to better/different network or close video/sharing - Bad Wi-Fi/-Network detected |
| • Better Quality available but user still not using it | Detection done that both sides have say, better Audio quality capabilities but user not using it | Alert: Selecting a better connection from settings for lower power and better quality.<br><br>In some embodiments, this may be negotiated automatically by communication with user device. |
| • Accessory Firmware not latest - Accessory Firmware has bugs - leading to experience issues | Headset firmware read during the connection and wireless source device finds that there is a better/updated firmware available | User informed that the accessory has a better/updated firmware available which can mitigate problems |
| • Headset Battery is nearing end of life (EOL) | Wireless receiver device shares indication of the battery EOL date | User informed - that it is time to change accessory batteries |
| • Another Accessory(s) with better score available to user | Based on scoring of each user accessory there is a better user headset available for use by the user | User informed - "Move to a better Accessory (*with the relevant accessory name*)" |
| • Range not high | Range of Accessories judged Vs packet error rate (PER) and a better accessory is scored at current range | User informed - "Move to a better Accessory (*with the relevant accessory name*)" |
| • Too many hours of continuous usage of wireless Accessory | Calculate the usage time of Bluetooth® or Wi-Fi accessories<br><br>- detected based on thresholds of "Streaming hours ‖ Call hours ‖ Idle" values maintained in memory of wireless source device | User showed the hours of usage and recommend that the user not use the accessory continuously for too long |

## ENABLEMENT PATH

Specific telemetry constructs (e.g., Intel specific telemetry constructs) may be designed/configured or redesigned/reconfigured in such a way as to provide real time vectors on the connectivity, stability and periodic performance statistics to the host.

Bluetooth®, Wi-Fi and Audio instruments (e.g., Intel Bluetooth®, Wi-Fi and Audio instruments) may be combined to infer about the user experience in almost precise fashion without asking the user for feedback or detailed logs etc. Some embodiments herein may collect some transport characteristics via various solutions and then the media logic circuitry of the mobile phone 1014 or other wireless source device, infer the current situation. For example, a connectivity app or specific manufacturer app may collect the transport characteristics such as audio telemetry, BT controller telemetry, and BT physical layer (PHY) level telemetry from the wireless source device.

BASED ON SPECIFIC INFORMATION

The media logic circuitry of the wireless source device may detect the symptoms, or indications, of a misbehavior and use the detected symptoms to set boundaries based on Telemetry (e.g., Intel Telemetry) coming from the wireless receiver device alongside the operating system telemetry of the wireless source device in some cases - thereby allowing the inferences to be drawn in details:

Inputs >>

1) Connectivity Controller Connection Telemetry
2) Connectivity Controller Assert Telemetry
3) Connectivity Counters for Scheduler misses, job denials
4) Connectivity Controller Performance Telemetry
5) Audio Buffer status (BUFFER RESIDES BETWEEN BT AND Call-Applications)

To illustrate, based on the input telemetry (transport characteristics), the media logic circuitry of the mobile device 1014 (a wireless source device) may receive an inference indicating or determining that the user experienced audio dropped from the wireless headset 1016 (wireless receiver device). In such situations, the media logic circuitry of the mobile device 1014 may infer or determine that the BT link dropped, there are functional issues with the wireless headset 1016, or the wireless headset 1016 issued a crash assert.

In some embodiments, in a conference call situation, the media logic circuitry of the wireless device may determine that others cannot hear the user at the wireless device or the user at the wireless device cannot hear the other users in the conference call. Based on this determination, the media logic circuitry of the wireless device may determine that the wireless device is in a congestion zone, the wireless device has insufficient transmit power, the wireless device is rejecting data packets of the audio stream, or the wireless device is moving away from the wireless source device. In some of these situations, the media logic circuitry of the wireless device may determine that a bandwidth limitation of the wireless device is causing the others not hear the user or the user not to hear the others based on a buffer status. In some of these situations, the media logic circuitry of the wireless device may detect a Wi-Fi coexistence issue that is causing the others not hear the user or the user not to hear the others. In some of these situations, the media logic circuitry of the wireless device may detect a low battery of the wireless device that is causing the others not hear the user or the user not to hear the others in the conference call based on battery indicators at the wireless device.

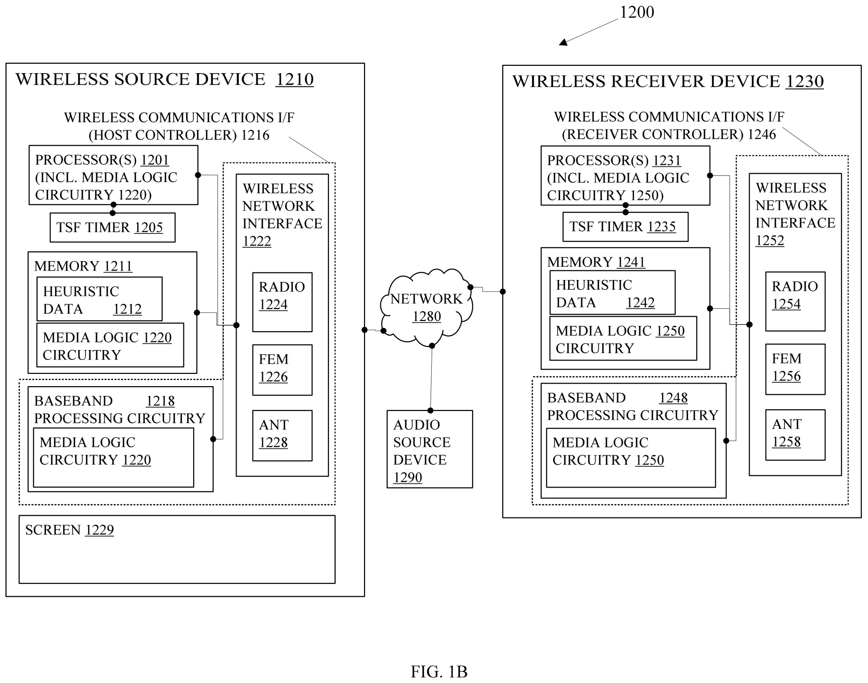

FIG. 1B depicts an embodiment of a system 1200 including multiple wireless devices to implement media logic circuitry, such as the wireless media device(s) 1020, base station 1030, user device(s) 1010 shown in FIG. 1A. System 1200 may transmit or receive as well as generate, decode, and interpret transmissions between the wireless source device 1210, the wireless receiver device 1230, and the audio source device 1290. The wireless source device 1210 may wirelessly connect to the wireless receiver device 1230 via a Bluetooth® channel, a Wi-Fi channel, or another wireless channel such as a 2.4 GHz channel, a 5 GHz channel, a 6 GHz channel, and/or the like.

In some embodiments, the wireless source device 1210, wireless receiver device 1230, and the audio source device 1290 may include one or more computer systems similar to that of the example machines/systems of FIGs 5, 6, 7, and 8.

The wireless receiver device 1230 may include media logic circuitry, such as the media logic circuitry 1220 of wireless source device 1210, to associate with the wireless source device 1210 via transmission opportunities (TxOPs) on, e.g., a Bluetooth® low energy (BLE) channel or Wi-Fi channel (e.g., 2.4 GHz) to receive an audio data stream of a podcast, webcast, or music.

The wireless source device 1210 may receive the audio data stream from the audio source device 1290 and retransmit the audio data stream to the wireless receiver device 1230 in the form of data packets.

The wireless source device 1210 may comprise a wireless communications interface 1216, such as a Wi-Fi interface and/or a BT host controller, comprising baseband processing circuitry 1218 coupled with a wireless network interface 1222 to perform transport layer, scheduling layer, MAC layer (link layer), and physical layer (PHY) functionality for transmitting and receiving communications via, e.g., a BLE channel and/or a Wi-Fi channel. The wireless source device 1210 may transmit, e.g., a BT frame, a Wi-Fi frame, or other wireless frame to the wireless receiver device 1230 via the network 1280 such as a data frame or an aggregated data frame with data of a data stream.

The wireless source device 1210 may comprise processor(s) 1201 and memory 1211. The processor(s) 1201 may comprise any data processing device such as a microprocessor, a microcontroller, a state machine, and/or the like, and may execute instructions or code in the memory 1211. The memory 1211 may comprise a storage medium such as Dynamic Random Access Memory (DRAM), read only memory (ROM), buffers, registers, cache, flash memory, hard disk drives, solid-state drives, or the like. The memory 1211 may store 1212 heuristic data, frames, frame structures, frame headers, etc., and may also comprise code to generate, scramble, encode, decode, parse, and interpret MAC frames and/or PHY frames (PDUs).

The wireless source device 1210 may also comprise baseband processing circuitry 1218. In some embodiments, the baseband processing circuitry 1218 may interact with one or more analog devices to perform PHY functionality such as scrambling, encoding, modulating, and the like. In other embodiments, the baseband processing circuitry 1218 may execute code to perform one or more of the PHY functionality such as scrambling, encoding, modulating, and the like.

The MAC layer functionality may execute MAC layer code stored in the memory 1211. In further embodiments, the MAC layer functionality may interface the processor(s) 1201 to interface with a host application such as a conference application, a streaming music application, an operating system, or the like that may be executing on the processor(s) 1201.

The MAC layer functionality may communicate with the PHY to transmit a MAC frame such as a BT frame or a Wi-Fi frame, in a PHY frame to the wireless receiver device 1230. The MAC layer functionality may generate frames such as management, data, and control frames. In many embodiments, the MAC layer functionality may also generate aggregated data frames to communicate multiple MAC data frames in a single PHY packet.

The PHY may prepare the MAC frame for transmission by, e.g., determining a preamble to prepend to a MAC frame to create a PHY frame. A wireless network interface 1222 or the baseband processing circuitry 1218 may prepare the PHY frame as a scrambled, encoded, modulated PDU in the time domain signals for the radio 1224. Furthermore, the TSF timer 1205 may provide a timestamp value to indicate the time at which the PDU is transmitted.

After processing the PHY frame, a radio 1224 may impress digital data onto subcarriers of RF frequencies for transmission. A front-end module (FEM) 1226 with one or more filters and one or more stages of amplifiers including at least one power amplifier (PA) may prepare the subcarriers of RF frequencies for transmission by electromagnetic radiation via elements of an antenna array or antennas 1224 and via the network 1280 to a receiving device such as the wireless receiver device 1230.

The wireless network I/F 1222 also comprises a receiver. The receiver receives electromagnetic energy, extracts the digital data, and the analog PHY and/or the baseband processor 1218 decodes a PHY frame and a MAC frame from a PDU. For instance, the wireless network I/F 1222 may receive information related to communication of data from the wireless receiver device 1230 such as acknowledgements (ACKs), negative acknowledgements (NAKs), received signal strength indicators (RSSIs), battery level indicators, buffer conditions (overflow, underflow, wrong packets, late packets, etc.), packet error rates (PERs), and/or the like.

The wireless receiver device 1230 may receive, e.g., a BT frame, a Wi-Fi frame, or other wireless frame from the wireless source device 1210 via the network 1280 such as a data frame or an aggregated data frame with data of a data stream. The wireless receiver device 1230 may comprise processor(s) 1231 and memory 1241. The processor(s) 1231 may comprise any data processing device such as a microprocessor, a microcontroller, a state machine, and/or the like, and may execute instructions or code in the memory 1241. The memory 1241 may comprise a storage medium such as Dynamic Random Access Memory (DRAM), read only memory (ROM), buffers, registers, cache, flash memory, hard disk drives, solid-state drives, or the like. The memory 1241 may store 1242 heuristic data, frames, frame structures, frame headers, etc., and may also comprise code to generate, scramble, encode, decode, parse, and interpret MAC frames and/or PHY frames (PDUs).

The wireless receiver device 1230 may comprise a wireless communications interface 1246, such as a Wi-Fi interface or a BT host controller, comprising baseband processing circuitry 1248 coupled with a wireless network interface 1252 to perform transport layer, scheduling layer, MAC layer (link layer), and physical layer (PHY) functionality for transmitting and receiving communications via, e.g., a BLE channel and/or a Wi-Fi channel. The baseband processing circuitry 1248 may comprise a baseband processor and/or one or more circuits to implement a station management entity and the station management entity may interact with a MAC layer management entity to perform MAC layer functionality and a PHY management entity to perform PHY functionality. In such embodiments, the baseband processing circuitry 1248 may interact with processor(s) 1231 to coordinate higher level functionality, such as an application-level functionality, with MAC layer and PHY functionality.

In some embodiments, the baseband processing circuitry 1248 may interact with one or more analog devices to perform PHY functionality such as descrambling, decoding, demodulating, and the like. In other embodiments, the baseband processing circuitry 1248 may execute code to perform one or more of the PHY functionalities such as descrambling, decoding, demodulating, and the like.

The wireless receiver device 1230 may receive a Wi-Fi frame or a BT frame at the antennas 1258, which pass the signals along to the FEM 1256. The FEM 1256 may amplify and filter the signals via one or more stages of filters and one or more stages of amplifiers including at least one low noise amplifier (LNA) and pass the signals to the radio 1254. The radio 1254 may filter the carrier signals from the signals and determine if the signals represent a protocol data unit (PDU) such as a PHY data frame. If so, analog circuitry of the wireless network I/F 1252 or physical layer functionality implemented in the baseband processing circuitry 1248 may demodulate, decode, descramble, etc. the PDU. The baseband processing circuitry 1248 may identify, parse, and interpret the Wi-Fi frame or BT frame from PDU.

In many embodiments, the baseband processing circuitry 1218, memory 1211, and/or the processor(s) 1201 of the wireless source device 1210 may comprise media logic circuitry 1220 to monitor and collect transport characteristics for data communications including health statistics received from media logic circuitry 1250 of the wireless receiver device 1230 to monitor a quality of communication of data to the wireless receiver device 1230. The media logic circuitry 1220 may also evaluate the transport characteristics for a degradation in the quality that may impact a user experience, identify a root cause of the degradation, and perform an operation to mitigate the degradation of the quality to improve the user experience.

In some embodiments, the media logic circuitry 1220 of the wireless source device 1210 may receive user feedback from the media logic circuitry 1250 of the wireless receiver device 1230 indicative of an impact on the user experience. In some embodiments, the media logic circuitry 1220 may determine an impact on user experience based on evaluation of the transport characteristics based on the heuristic data stored in the memory 1211. For example, evaluation of the transport characteristics may include comparison of counter values associated with transport characteristics with thresholds for such counters in the heuristic data. The counters may include, e.g., a counter for a number of incoming payloads that were lost, a counter for a number of outgoing payloads that were lost, a counter for a number of NO SYNC's found during the receiver use case, a counter for a number of failed Rx packets due to header errors, a counter for a number of failed Rx packets due to CRC errors, a counter for a number of samples not received in time from the host to controller, a counter for a number of samples dropped due to not receiving the right packets in time, and/or the like. In some embodiments, the evaluation may include a comparison of a battery level indicator against a threshold for the battery level indicator from the heuristic data. Based on the comparisons and other evaluations, the media logic circuitry 1220 may determine that the quality of data communication is degraded to an extent that the degradation may impact a user experience.

In some embodiments, the media logic circuitry 1220 may capture user feedback from a user of the wireless receiver device 1230 and the wireless source device 1210. The user feedback may indicate a degradation of the quality and/or an impact on a user experience.

In some embodiments, evaluation of the transport characteristics may include estimating an upper limit (or maximum) of an achievable MOS for transmission of data to the wireless receiver device 1230 and detecting a degradation in the quality based on the upper limit of the achievable MOS. For instance, some embodiments may compare the upper limit of the achievable MOS against a MOS threshold from the heuristic data to determine whether the quality of communication is degraded to an extent that impacts user experience.

In many embodiments, the baseband processing circuitry 1248, memory 1241, and/or the processor(s) 1231 of the wireless source device 1230 may comprise media logic circuitry 1250 to gather and transmit transport characteristics from the wireless receiver device 1230 to the wireless source device 1230. In some embodiments, the media logic circuitry 1250 may capture and cause transmission of user feedback from a user of the wireless receiver device 1230 to the wireless source device 1210.

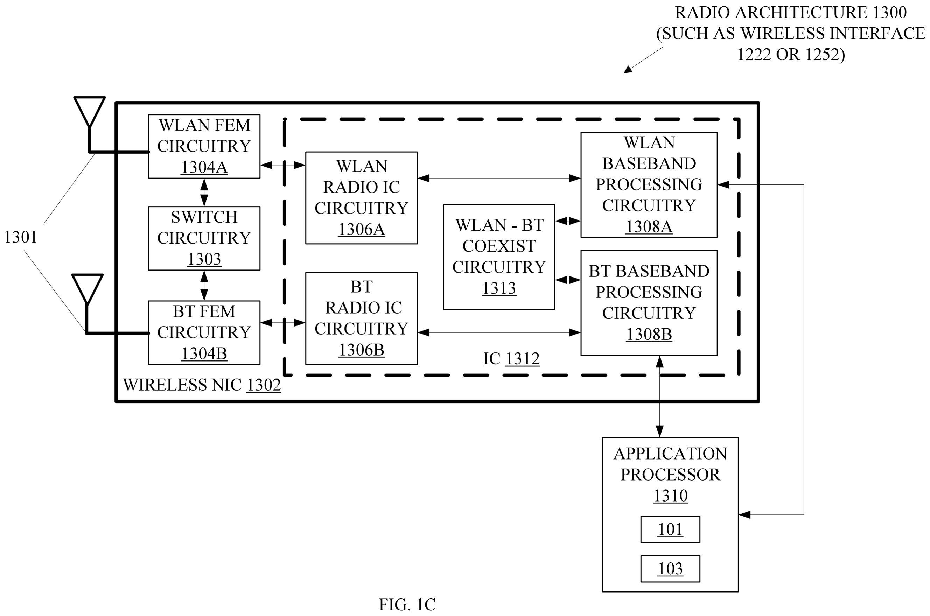

FIG. 1C is a block diagram of a radio architecture 1300 such as the wireless communications I/F 1222 and 1252 in accordance with some embodiments that may be implemented in, e.g., the wireless source device 1210 and/or the wireless receiver device 1230 of FIG. 1B. The radio architecture 1300 may include radio front-end module (FEM) circuitry 1304a-b, radio IC circuitry 1306a-b and baseband processing circuitry 1308a-b. The radio architecture 1300 as shown includes both Wireless Local Area Network (WLAN) functionality and Bluetooth® (BT) functionality although embodiments are not so limited. In this disclosure, "WLAN" and "Wi-Fi" are used interchangeably.

FEM circuitry 1304a-b may include a WLAN or Wi-Fi FEM circuitry 1304a and a Bluetooth® (BT) FEM circuitry 1304b. The WLAN FEM circuitry 1304a may include a receive signal path comprising circuitry configured to operate on WLAN RF signals received from one or more antennas 1301, to amplify the received signals and to provide the amplified versions of the received signals to the WLAN radio IC circuitry 1306a for further processing. The BT FEM circuitry 1304b may include a receive signal path which may include circuitry configured to operate on BT RF signals received from one or more antennas 1301, to amplify the received signals and to provide the amplified versions of the received signals to the BT radio IC circuitry 1306b for further processing. FEM circuitry 1304a may also include a transmit signal path which may include circuitry configured to amplify WLAN signals provided by the radio IC circuitry 1306a for wireless transmission by one or more of the antennas 1301. In addition, FEM circuitry 1304b may also include a transmit signal path which may include circuitry configured to amplify BT signals provided by the radio IC circuitry 1306b for wireless transmission by the one or more antennas. In the embodiment of FIG. 1C, although FEM 1304a and FEM 1304b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1306a-b as shown may include WLAN radio IC circuitry 1306a and BT radio IC circuitry 1306b. The WLAN radio IC circuitry 1306a may include a receive signal path which may include circuitry to down-convert WLAN RF signals received from the FEM circuitry 1304a and provide baseband signals to WLAN baseband processing circuitry 1308a. BT radio IC circuitry 1306b may in turn include a receive signal path which may include circuitry to down-convert BT RF signals received from the FEM circuitry 1304b and provide baseband signals to BT baseband processing circuitry 1308b. WLAN radio IC circuitry 1306a may also include a transmit signal path which may include circuitry to up-convert WLAN baseband signals provided by the WLAN baseband processing circuitry 1308a and provide WLAN RF output signals to the FEM circuitry 1304a for subsequent wireless transmission by the one or more antennas 1301. BT radio IC circuitry 1306b may also include a transmit signal path which may include circuitry to up-convert BT baseband signals provided by the BT baseband processing circuitry 1308b and provide BT RF output signals to the FEM circuitry 1304b for subsequent wireless transmission by the one or more antennas 1301. In the embodiment of FIG. 1C, although radio IC circuitries 1306a and 1306b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1308a-b may include a WLAN baseband processing circuitry 1308a and a BT baseband processing circuitry 1308b. The WLAN baseband processing circuitry 1308a may include a memory, such as, for example, a set of RAM arrays in a Fast Fourier Transform or Inverse Fast Fourier Transform block (not shown) of the WLAN baseband processing circuitry 1308a. Each of the WLAN baseband circuitry 1308a and the BT baseband circuitry 1308b may further include one or more processors and control logic to process the signals received from the corresponding WLAN or BT receive signal path of the radio IC circuitry 1306a-b, and to also generate corresponding WLAN or BT baseband signals for the transmit signal path of the radio IC circuitry 1306a-b. Each of the baseband processing circuitries 1308a and 1308b may further include physical layer (PHY) and medium access control layer (MAC) circuitry (or link layer circuitry), and may further interface with a device for generation and processing of the baseband signals and for controlling operations of the radio IC circuitry 1306a-b.

Referring still to FIG. 1C, according to the shown embodiment, WLAN-BT coexistence circuitry 1313 may include logic providing an interface between the WLAN baseband circuitry 1308a and the BT baseband circuitry 1308b to enable use cases requiring WLAN and BT coexistence. In addition, a switch circuitry 1303 may be provided between the WLAN FEM circuitry 1304a and the BT FEM circuitry 1304b to allow switching between the WLAN and BT radios according to application needs. In addition, although the antennas 1301 are depicted as being respectively connected to the WLAN FEM circuitry 1304a and the BT FEM circuitry 1304b, embodiments include within their scope the sharing of one or more antennas as between the WLAN and BT FEMs, or the provision of more than one antenna connected to each of FEM 1304a or 1304b.

In some embodiments, the front-end module circuitry 1304a-b, the radio IC circuitry 1306a-b, and baseband processing circuitry 1308a-b may be provided on a single radio card, such as wireless network interface card (NIC) 1302. In some other embodiments, the one or more antennas 1301, the FEM circuitry 1304a-b and the radio IC circuitry 1306a-b may be provided on a single radio card. In some other embodiments, the radio IC circuitry 1306a-b and the baseband processing circuitry 1308a-b may be provided on a single chip or integrated circuit (IC), such as IC 1312.

In some embodiments, the wireless NIC 1302 may include a WLAN radio card and may be configured for Wi-Fi communications, although the scope of the embodiments is not limited in this respect. In some of these embodiments, the radio architecture 1300 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 1300 may be part of a Wi-Fi communication station (STA) such as a wireless access point (AP), a base station or a mobile device including a Wi-Fi device. In some of these embodiments, radio architecture 1300 may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2020, 802.11ay, 802.11ba, 802.11ax, and/or 802.11be standards and/or proposed specifications for WLANs, although the scope of embodiments is not limited in this respect. The radio architecture 1300 may also be suitable to transmit and/or receive communications in accordance with other techniques and standards.

In some embodiments, the radio architecture 1300 may be configured for high-efficiency Wi-Fi (HEW) communications in accordance with the IEEE 802.11ax standard. In these embodiments, the radio architecture 1300 may be configured to communicate in accordance with an OFDMA technique, although the scope of the embodiments is not limited in this respect.

In some other embodiments, the radio architecture 1300 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1C, the BT baseband circuitry 1308b may be compliant with a Bluetooth® (BT) connectivity specification such as Bluetooth® 5.0, or any other iteration of the Bluetooth® specification.

In some embodiments, the radio architecture 1300 may include other radio cards, such as a cellular radio card configured for cellular (e.g., 5GPP such as LTE, LTE-Advanced or 7G communications).

In some IEEE 802.11 embodiments, the radio architecture 1300 may be configured for communication over various channel bandwidths including bandwidths having center frequencies of about 2.4 GHz, 5 GHz, and 6 GHz. The various bandwidths may include bandwidths of about 20 MHz, 40 MHz, 80 MHz, 160 MHz, 240 MHz, and 320 MHz with contiguous or non-contiguous bandwidths having increments of 20 MHz, 40 MHz, 80 MHz, 160 MHz, 240 MHz, and 320 MHz. The scope of the embodiments is not limited with respect to the above center frequencies, however.

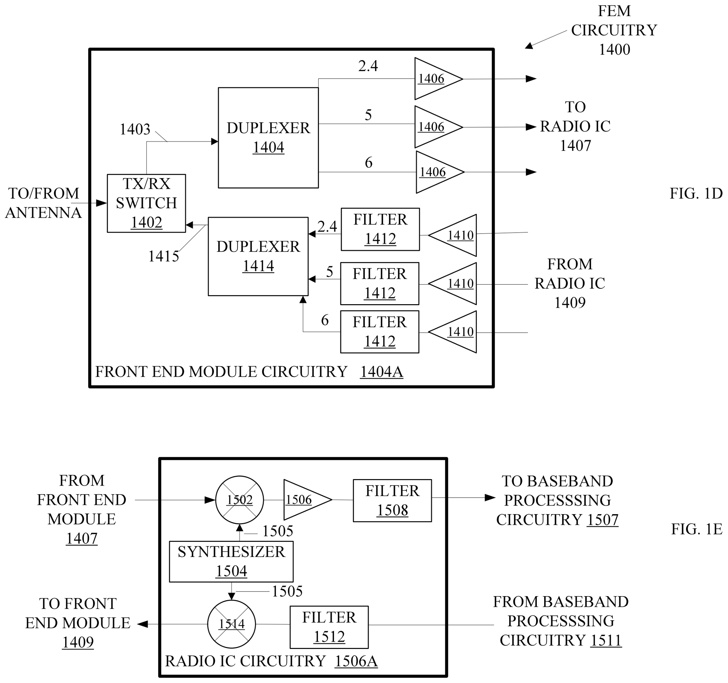

FIG. 1D illustrates front end module (FEM) circuitry 1400 such as WLAN FEM circuitry 1304a and/or the BT FEM circuitry 1304b shown in FIG. 1C in accordance with some embodiments. Although the example of FIG. 1D is described in conjunction with the WLAN FEM circuitry 1304a, the example of FIG. 1D may be described in conjunction with other configurations such as the BT FEM circuitry 1304b.

In some embodiments, the FEM circuitry 1400 may include a TX/RX switch 1402 to switch between transmit mode and receive mode operation. The FEM circuitry 1400 may include a receive signal path and a transmit signal path. The receive signal path of the FEM circuitry 1400 may include a low-noise amplifier (LNA) 1406 to amplify received RF signals 1403 and provide the amplified received RF signals 1407 as an output (e.g., to the radio IC circuitry 1306a-b (FIG. 1C)). The transmit signal path of the circuitry 1304a may include a power amplifier (PA) to amplify input RF signals 1409 (e.g., provided by the radio IC circuitry 1306a-b), and one or more filters 1412, such as band-pass filters (BPFs), low-pass filters (LPFs) or other types of filters, to generate RF signals 1415 for subsequent transmission (e.g., by one or more of the antennas 1301 (FIG. 1C)) via an example duplexer 1414.

In some dual-mode embodiments for Wi-Fi communication, the FEM circuitry 1400 may be configured to operate in the 2.4 GHz frequency spectrum, the 5 GHz frequency spectrum, or the 6 GHz frequency spectrum. In these embodiments, the receive signal path of the FEM circuitry 1400 may include a receive signal path duplexer 1404 to separate the signals from each spectrum as well as provide a separate LNA 1406 for each spectrum as shown. In these embodiments, the transmit signal path of the FEM circuitry 1400 may also include a power amplifier 1410 and a filter 1412, such as a BPF, an LPF or another type of filter for each frequency spectrum and a transmit signal path duplexer 1404 to provide the signals of one of the different spectrums onto a single transmit path for subsequent transmission by the one or more of the antennas 1301 (FIG. 1C). In some embodiments, BT communications may utilize the 2.4 GHz signal paths and may utilize the same FEM circuitry 1400 as the one used for WLAN communications.

FIG. 1E illustrates radio integrated circuit (IC) circuitry 1506a in accordance with some embodiments. The radio IC circuitry 1306a is one example of circuitry that may be suitable for use as the WLAN or BT radio IC circuitry 1306a/1306b (FIG. 1C), although other circuitry configurations may also be suitable. Alternatively, the example of FIG. 1E may be described in conjunction with the example BT radio IC circuitry 1306b.

In some embodiments, the radio IC circuitry 1306a may include a receive signal path and a transmit signal path. The receive signal path of the radio IC circuitry 1306a may include at least mixer circuitry 1502, such as, for example, down-conversion mixer circuitry, amplifier circuitry 1506 and filter circuitry 1508. The transmit signal path of the radio IC circuitry 1306a may include at least filter circuitry 1512 and mixer circuitry 1514, such as, for example, up-conversion mixer circuitry. Radio IC circuitry 1306a may also include synthesizer circuitry 1504 for synthesizing a frequency 1505 for use by the mixer circuitry 1502 and the mixer circuitry 1514. The mixer circuitry 1502 and/or 1514 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 1E illustrates only a simplified version of a radio IC circuitry, and may include, although not shown, embodiments where each of the depicted circuitries may include more than one component. For instance, mixer circuitry 1514 may each include one or more mixers, and filter circuitries 1508 and/or 1512 may each include one or more filters, such as one or more BPFs and/or LPFs according to application needs. For example, when mixer circuitries are of the direct-conversion type, they may each include two or more mixers.

In some embodiments, mixer circuitry 1502 may be configured to down-convert RF signals 1407 received from the FEM circuitry 1304a-b (FIG. 1C) based on the synthesized frequency 1505 provided by synthesizer circuitry 1504. The amplifier circuitry 1506 may be configured to amplify the down-converted signals and the filter circuitry 1508 may include an LPF configured to remove unwanted signals from the down-converted signals to generate output baseband signals 1507. Output baseband signals 1507 may be provided to the baseband processing circuitry 1308a-b (FIG. 1C) for further processing. In some embodiments, the output baseband signals 1507 may be zero-frequency baseband signals, although this is not a requirement. In some embodiments, mixer circuitry 1502 may comprise passive mixers, although the scope of the embodiments is not limited in this respect.

In some embodiments, the mixer circuitry 1514 may be configured to up-convert input baseband signals 1511 based on the synthesized frequency 1505 provided by the synthesizer circuitry 1504 to generate RF output signals 1409 for the FEM circuitry 1304a-b. The baseband signals 1511 may be provided by the baseband processing circuitry 1308a-b and may be filtered by filter circuitry 1512. The filter circuitry 1512 may include an LPF or a BPF, although the scope of the embodiments is not limited in this respect.

In some embodiments, the mixer circuitry 1502 and the mixer circuitry 1514 may each include two or more mixers and may be arranged for quadrature down-conversion and/or up-conversion respectively with the help of synthesizer 1504. In some embodiments, the mixer circuitry 1502 and the mixer circuitry 1514 may each include two or more mixers each configured for image rejection (e.g., Hartley image rejection). In some embodiments, the mixer circuitry 1502 and the mixer circuitry 1514 may be arranged for direct down-conversion and/or direct up-conversion, respectively. In some embodiments, the mixer circuitry 1502 and the mixer circuitry 1514 may be configured for super-heterodyne operation, although this is not a requirement.

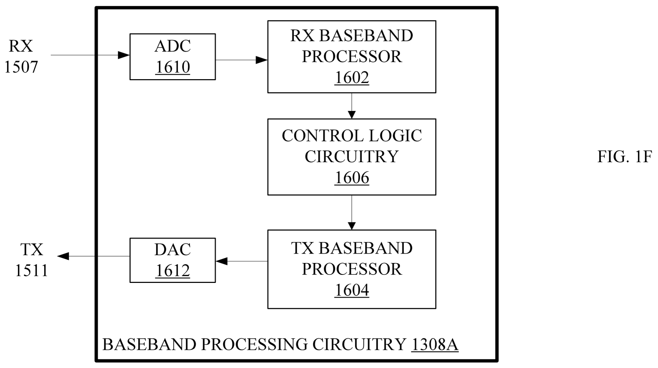

Mixer circuitry 1502 may comprise, according to one embodiment: quadrature passive mixers (e.g., for the in-phase (I) and quadrature phase (Q) paths). In such an embodiment, RF input signal 1407 from FIG. 1F may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1505 of synthesizer 1504 (FIG. 1E). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1407 (FIG. 1D) may comprise a balanced signal, although the scope of the embodiments is not limited in this respect. The I and Q baseband output signals may be provided to low-noise amplifier, such as amplifier circuitry 1506 (FIG. 1E) or to filter circuitry 1508 (FIG. 1E).

In some embodiments, the output baseband signals 1507 and the input baseband signals 1511 may be analog baseband signals, although the scope of the embodiments is not limited in this respect. In some alternate embodiments, the output baseband signals 1507 and the input baseband signals 1511 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1504 may be a fractional-N synthesizer or a fractional N/N+1 synthesizer, although the scope of the embodiments is not limited in this respect as other types of frequency synthesizers may be suitable. For example, synthesizer circuitry 1504 may be a delta-sigma synthesizer, a frequency multiplier, or a synthesizer comprising a phase-locked loop with a frequency divider. According to some embodiments, the synthesizer circuitry 1504 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1504 may be provided by a voltage controlled oscillator (VCO), although that is not a requirement. A divider control input may further be provided by either of the baseband processing circuitry 1308a-b (FIG. 1D) depending on the desired output frequency 1505. In some embodiments, a divider control input (e.g., N) may be determined from a look-up table (e.g., within a Wi-Fi card) based on a channel number and a channel center frequency as determined or indicated by the example application processor 1310. The application processor 1310 may include, or otherwise be connected to, one of the example secure signal converter 101 or the example received signal converter 103 (e.g., depending on which device the example radio architecture is implemented in).

In some embodiments, synthesizer circuitry 1504 may be configured to generate a carrier frequency as the output frequency 1505, while in other embodiments, the output frequency 1505 may be a fraction of the carrier frequency (e.g., one-half the carrier frequency, one-third the carrier frequency). In some embodiments, the output frequency 1505 may be a LO frequency (fLO).

FIG. 1F illustrates a functional block diagram of baseband processing circuitry 1308a in accordance with some embodiments. The baseband processing circuitry 1308a is one example of circuitry that may be suitable for use as the baseband processing circuitry 1308a (FIG. 1C), although other circuitry configurations may also be suitable. Alternatively, the example of FIG. 1F may be used to implement the example BT baseband processing circuitry 1308b of FIG. 1C.

The baseband processing circuitry 1308a may include a receive baseband processor (RX BBP) 1602 for processing receive baseband signals 1509 provided by the radio integrated circuit (IC) circuitry 1306a-b (FIG. 1C) and a transmit baseband processor (TX BBP) 1604 for generating transmit baseband signals 1511 for the radio IC circuitry 1306a-b. The baseband processing circuitry 1308a may also include control logic 1606 for coordinating the operations of the baseband processing circuitry 1308a.

In some embodiments (e.g., when analog baseband signals are exchanged between the baseband processing circuitry 1308a-b and the radio IC circuitry 1306a-b), the baseband processing circuitry 1308a may include ADC 1610 to convert analog baseband signals 1609 received from the radio IC circuitry 1306a-b to digital baseband signals for processing by the RX BBP 1602. In these embodiments, the baseband processing circuitry 1308a may also include digital-to-analog converter (DAC) 1612 to convert digital baseband signals from the TX BBP 1604 to analog baseband signals 1611.

In some embodiments that communicate orthogonal frequency multiplexing (OFDM) signals or orthogonal frequency multiple access (OFDMA) signals, such as through baseband processor 1308a, the transmit baseband processor 1604 may be configured to generate OFDM or OFDMA signals as appropriate for transmission by performing an inverse fast Fourier transform (IFFT). The receive baseband processor 1602 may be configured to process received OFDM signals or OFDMA signals by performing an FFT. In some embodiments, the receive baseband processor 1602 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 1D, in some embodiments, the antennas 1301 (FIG. 1D) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1301 may each include a set of phased-array antennas, although embodiments are not so limited.

Although the radio architecture 1300 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth®®, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

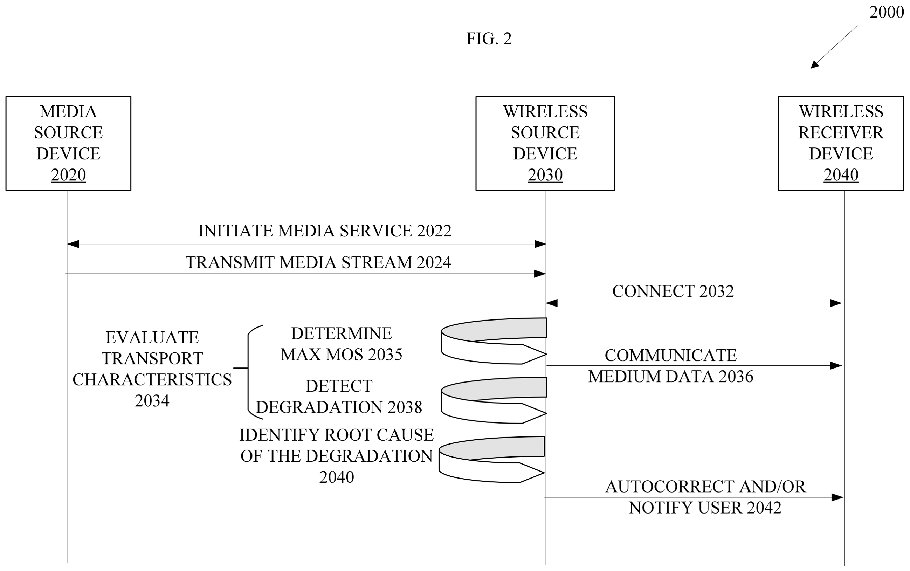

FIG. 2 illustrates an embodiment 2000 of describing communications between a media source device 2020, a wireless source device 2030, and a wireless receiver device 2040 such as the media source device(s) 1020, base station 1030, and user device(s) 1010 shown in FIG. 1A as well as the wireless source device 1210 and wireless receiver device 1230 shown in FIG. 1B. The media source device 2020 may comprise a data streaming source for audio, video, or a combination thereof. The wireless source device 2030 may comprise, e.g., a user device that receives the data streams from the wireless source device 2030 and retransmits the data streams to the wireless receiver device 2040. Note that while the embodiment 2000 illustrates one-way data streaming from the media source device 2020 to the wireless source device 2030, and to the wireless receiver device 2040, other embodiments may include two-way data streaming. For instance, the wireless receiver device 2040 may initiate data streams for destined for the wireless source device 2030 or to the media source device 2020. In such embodiments, the wireless receiver device 2040 may perform the functionality attributed to the wireless source device 2030 for communications of data initiated by the wireless receiver device 2040.

In the present embodiment, the wireless source device 2030 may interact with the media source device 2020 to initiate 2022 a media data streaming service such as a music streaming service. Thereafter, the media source device 2020 may transmit media data streams 2024 to the wireless source device 2030. The wireless source device 2030 may interact with the wireless receiver 2040 to connect or establish a wireless link or wireless channel between the wireless source device 2030 and the wireless receiver device 2040. For instance, the wireless link or channel may comprise a BT link or channel, a Wi-Fi link or channel, or the like.

After the establishing a connection 2032 with the wireless receiver device 2040, a media logic circuitry of the wireless source device 2030 may begin a process of evaluating transport characteristics 2034. The media logic circuitry of the wireless source device 2030 may evaluate the transport characteristics continuously, periodically, or aperiodically. In some embodiments, for example, the media logic circuitry of the wireless source device 2030 may capture the transport characteristics over a period of time such as thirty seconds, one minute, two minutes, five minutes, or the like and may, based on heuristic data maintained in memory of the wireless source device 2030, identify a root cause of degradation of the data transmissions to the wireless receiver device 2040.

In some embodiments, the media logic circuitry of the wireless source device 2030 may receive feedback from a user indicating a degradation in the quality of the communication of data to the wireless receiver device 2040. Based on the transport characteristics, heuristic data, and, in some instances, feedback from the user, the media logic circuitry of the wireless source device 2030 may identify symptoms/indications of the degradation of the quality. Based on the symptoms/indications and heuristic data, the media logic circuitry of the wireless source device 2030 may determine a root cause of the degradation in the quality of the communication of the data to the wireless receiver device 2040.

In some embodiments, the media logic circuitry of the wireless source device 2030 may perform evaluation of the transport characteristics by determining a maximum achievable MOS 2035 and detecting degradation 2038 based on the maximum achievable MOS. For example, the media logic circuitry of the wireless source device 2030 may employ a machine learning model trained to estimate a probability of a particular MOS (1 through 5 or 2 through 5) based on the transport characteristics captured instantaneously or captured over a period of time. The media logic circuitry of the wireless source device 2030 may employ a statistical model estimate the maximum achievable MOS based on one or more probabilities of particular MOS's. For example, the machine learning model may determine a probability for each MOS including 1, 2, 3, 4, and 5. Based on the probabilities for each MOS, the statistical model may estimate the maximum achievable MOS.

After identification of the root cause of the degradation of the quality, the media logic circuitry of the wireless source device 2030 may access memory of the wireless source device to associate the root cause with a set of actions to mitigate the degradation of the quality. Based on the set of actions, the media logic circuitry of the wireless source device 2030 may automatically perform one or more of the actions, or autocorrect, the degradation root cause and/or may notify the user 2042. In some embodiments, the media logic circuitry of the wireless source device 2030 may notify the user by accessing the memory of the wireless source device 2030 to associate the actions with natural language to display and/or announce the actions to the user via the wireless source device 2030 and/or the wireless receiver device 2040. In other embodiments, the media logic circuitry of the wireless source device 2030 may interact with a large language model (LLM) to obtain a set of natural language instructions for displaying and/or announcing to the user.

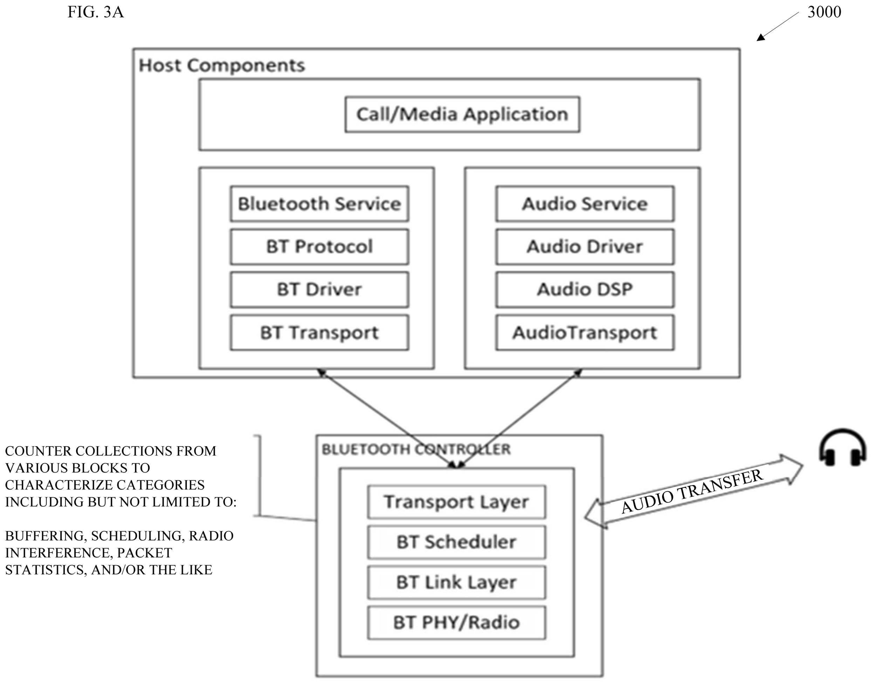

FIG. 3A illustrates a functional block diagram of a BT embodiment 3000 with media logic circuitry to collect transport (health) statistics per block of radio. Based on the collection of the transport characteristics, the media logic circuitry may determine an upper limit (or maximum) achievable MOS for identifying a degradation in the quality of communication of data and for mitigating the degradation of and/or improving the quality of communication of data from a wireless source device to a wireless receiver device such as the wireless source device 2030 and the wireless receiver device 2040 shown in FIG. 2.

In some embodiments, the media logic circuitry may be implemented via three parts of equal importance: (1) A real-time BT Transport Layer statistics and low-level radio report mechanism hosted at the user end, (2) an extensive operation of lab experiments that generate conditions that are similar to those found in real-world BT connectivity issues, then collect the BT transport characteristics along with matching Perceptual Objective Listening Assessment (POLQA) MOS measurements to generate heuristic data, and (3) a statistical/ machine learning model that is trained on the lab-generated heuristic data, capable of accurately estimating POLQA MOS scores solely out of BT transport characteristics.

Part 1 - BT Transport characteristics Report Mechanism

The media logic circuitry may collect the transport characteristics through the main blocks of the BT embodiment 3000 to understand where in the flow of the audio payload the quality issues are observed. In many embodiments, the media logic circuitry may define counters depicting one or more symptoms/indications of the quality issue, which may be converted into a user experience (UX) impact during, e.g., a voice call over a Bluetooth® headset.

The media logic circuitry may collect counters from various layers like a transport layer, a scheduling layer, link management layers, and radio layers to provide a health score of the transmit and receive path in terms of packet losses, retransmissions, latencies, buffer statuses, and the like. Some of the counters are provided below as an example, which can be used to understand one or more of the symptoms/indications that could lead to a lag in user experience. Embodiments are not limited to these examples.

Part 2 - Lab Experiments

Simulating field conditions, recording Bluetooth® transport and radio low-level statistics, and measuring POLQA MOS may be components in the MOS estimation framework of the media logic circuitry.

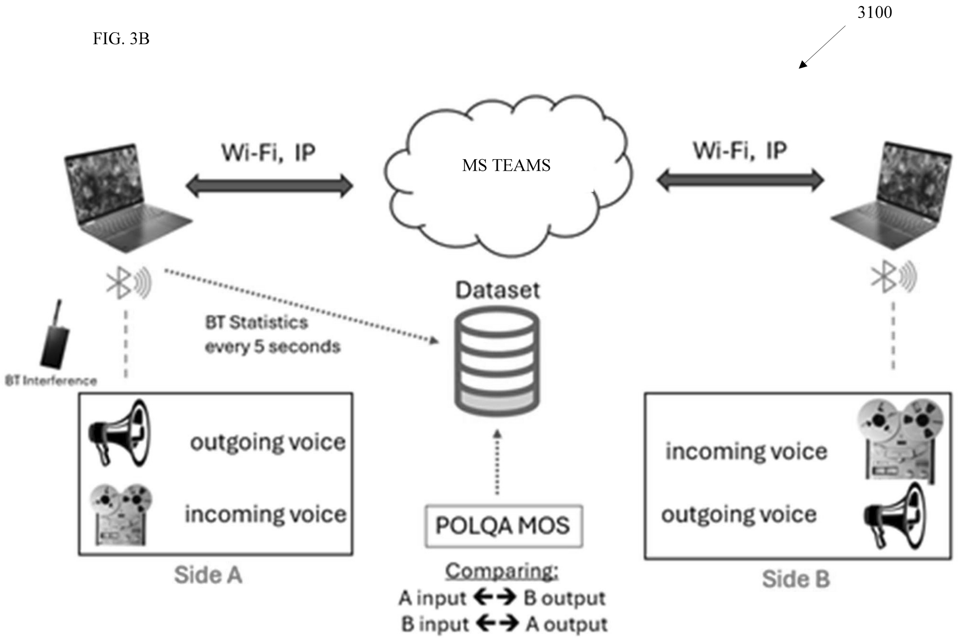

FIG. 3B illustrates an embodiment 3100 of a lab set-up for collection of heuristic data for the BT embodiment 3000. Functionality wise, the lab setup includes automation tools for voice injection, voice recording, POLQA MOS measurement software, Microsoft® Teams call setups and disconnections, BT signal interference tooling and data logging. End-to-end MS Teams calls may be conducted, with bi-directional voice routes traversing via the following path: BT <--> VoIP <--> VoIP <--> BT.

To ensure thorough and realistic testing, the experiments are designed to cover the following aspects (embodiments are not limited to these aspects):

1. Environmental Conditions

a. Clean Environment: Tests conducted in a controlled, noise-free environment to establish baseline performance.
b. Congested Environment: Tests performed in a controlled, congested environment to mimic real-world scenarios, including interference from other wireless devices.

2. Bluetooth® Device Roles: The device under test may operate as both Central and Peripheral roles during voice calls to evaluate performance in different configurations.
3. Bluetooth® Codecs

a. Wideband Speech (WBS) Codec: Testing may include the use of WBS codec to assess voice quality in wideband scenarios.
b. Narrowband Speech (NBS) Codec: Testing may also include the use of NBS codec to evaluate performance in narrowband conditions.

4. Full Range Sweep: The tests may cover a full sweep of attenuation levels, starting from near range to far range, until disconnection is achieved. This may also involve monitoring the Bluetooth® link RSSI (Received Signal Strength Indicator) to assess signal strength and stability across different distances.
5. Multi-profile Testing

a. Voice Call: may primarily focus on voice call performance.
b. LE (Low Energy) Mouse and Keyboard Traffic: Additional testing to evaluate the impact of LE Mouse and Keyboard traffic on voice call quality.

6. Wi-Fi - Bluetooth® Coexistence: Tests may be conducted to evaluate the performance of Bluetooth® devices in the presence of Wi-Fi signals in the 2.4 GHz band, simulating real-world coexistence scenarios.

Part 3 - Training a POLQA MOS Estimator from BT Statistics

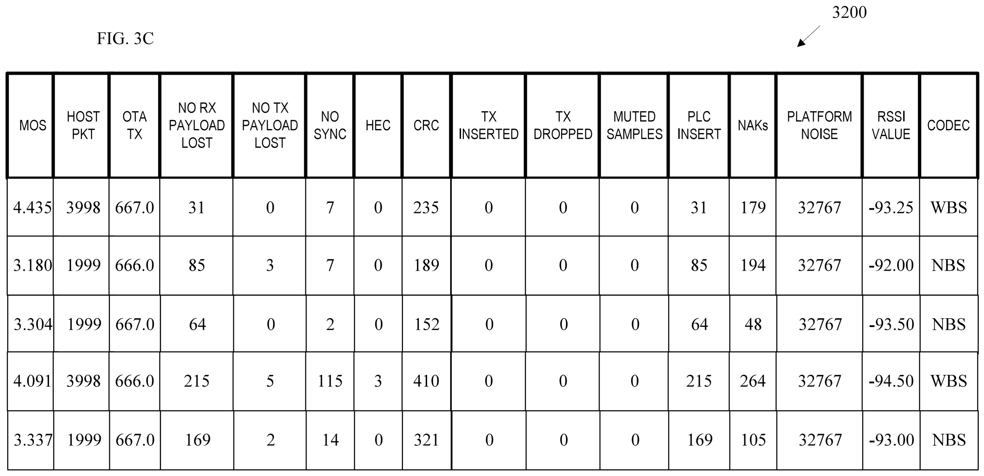

Once sufficient data was collected from the lab experiments, covering a range of BT real-world issues, the data was partitioned according to the MOS measurement periods, matching each POLQA MOS measurement with corresponding BT transport characteristics as illustrated in the table 3200 of FIG. 3C.

In the present example, POLQA MOS may be referring to the quality of either outgoing voice or incoming voice, both of which are measured during the lab experiments phase. For simplicity, the experiments separate the two modeling procedures, incoming modeling procedure and the outgoing modeling procedure. Note that the modeling procedures are identical but for the distinct datasets. For example, the focus, henceforth, is on the modeling of outgoing voice MOS but embodiments are not limited to these models.

In the present embodiment, the BT transport characteristics are collected every 5 seconds but can be defined for smaller intervals such as 2 or even 1 second. The fields arriving in each stats report are as shown in FIG. 3C.

- MOS - POLQUA MOS for outgoing voice data streams
- Host Packet (Pkt) - number of packets received from BT host
- Over-the-Air (OTA) transmit (Tx) - number of packets sent out to the air (wireless Tx)
- Number (No) receive (Rx) Payload Lost - number of incoming payloads that were lost
- No Tx Payload Lost - number of outgoing payloads that were lost

- No sync - number of NO SYNC's found during the Rx use case
- Header Error Check (HEC) - number of failed Rx packets due to header errors
- Cyclic Redundancy Check (CRC) - number of failed Rx packets due to CRC errors
- Tx Inserted - number of samples not received in time from the host to controller
- Tx Dropped - number of samples dropped due to not receiving the right packets in time
- Muted Samples - number of mute samples transmitted due to not enough samples from host
- Packet Loss Concealment (PLC) Insert - number of PLC samples injected by the controller
- Negative Acknowledgements (NAKs) - number of failed Rx packets due to NAK Errors
- Platform Noise - the average observed platform noise
- Received Signal Strength Indicator (RSSI) Value - moving average of the RSSI of packets received
- CodeDecode (Codec) - codec used in the session: either Narrowband Speech (NBS) or Wideband Speech (WBS)

Next, the data is partitioned into two distinct groups called "train set" and "test set", followed by the machine learning modeling phase. Training may be performed exclusively on the train set, and the model performance may be evaluated exclusively on the test set. Embodiments are not limited to the exclusive use of the training set for training and the testing set for evaluation.

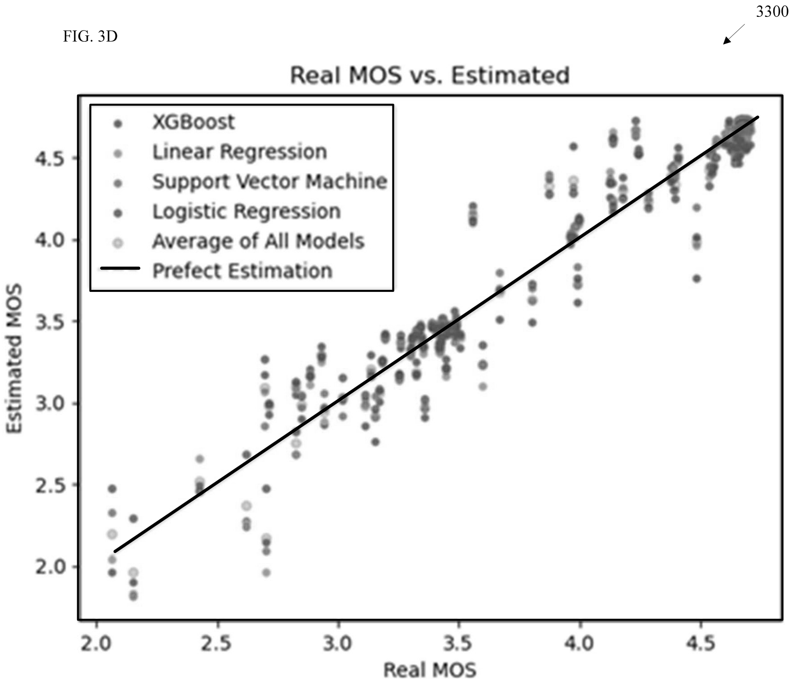

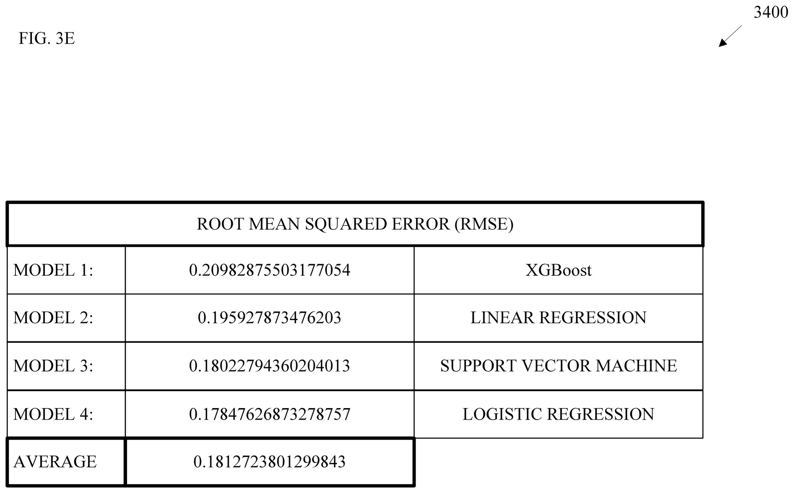

Several types of models along with data processing may be performed on the data, yielding MOS estimations with a varied range of accuracy. The accuracy results for the experiments and the modeling are shown in FIGs. 3D and 3E. In many embodiments, the models include machine learning models and statistical models. In such embodiments, the machine learning model may estimate a probability that a MOS is the real MOS (a maximum achievable MOS). The output of the machine learning model is combined with a statistical model such as XGBoost regression, linear regression, support vector machine, and logistic regression to generate an estimated MOS.

FIG. 3D illustrates a graph 3300 showing the Real MOS plotted against Estimated MOS, per Model. The Real MOS is the POLQUA MOS and the estimated MOS is the MOS estimated by the trained machine learning model combined with the statistical model.

FIG. 3E illustrates a table 3400 showing the root mean square error (RMSE) accuracy metric per model. The lower the value, the better the model estimated the MOS.

$$RMSE = \sqrt{\frac{1}{n}\sum_{i=1}^{n}(RealMOS_i - EstimateMOS_i)^2} \ , \quad n \text{ denotes the number of tested datapoints}$$

In FIG. 3D, we see the dominance of classical numerical models (Linear, Logistic and Support Vectors) over the common tree-based algorithm XGBoost Regression. We attribute this result to the relatively limited set of data points generated in our dataset, a setting under which XGBoost struggles to extrapolate accurately for new data points. For the most accurate model in the group, Logistic Regression, we elaborate further on the carried-out actions, as follows (embodiments are not limited to these actions):

1. As a first feature engineering phase, we produce two copies of each field in the original data, one for every instance of codec. Namely, the field "NAKs" (for instance) is split into two new fields: "NBS NAKs" and "WBS NAKs". If the codec in the BT session fits the name of the new field (e.g., field "NBS NAKs" during a NBS codec session), the field is assigned with the original "NAKs" value. Otherwise, it is set to zero (e.g., "WBS NAKs" during the NBS codec session).
2. We scale the fields using Min-Max scaling. Min-Max scaling transforms features (field values) by scaling each feature to a given range. For instance, the Min-Max scaling may scale and translate each feature (field value) individually such that it is in the given range on the training set such as a range between zero and one.
3. We set a multi-target for the Logistic Regression classifier: Given the BT transport characteristics, find the probability for the MOS being closest to one of the following targets: {2, 2.25, 2.5, 2.75. 3, 3.25, 3.5, 3.75, 4, 4.25, 4.5, 4.75}. Hence, 12 classification targets. Other embodiments may use a different set of classification targets and may have a different number of classification targets such as 1, 2, 3,4, and 5 or 1, 1.5, 2, 2.5, 3, 3.5, 4, 4.5, and 5.
4. Hyperparameters for the Logistic Regression model are obtained using cross-validation.
5. Finally, MOS is estimated using the following formula:

$$EstimatedMOS = \sum_i target_i \times prob(MOS\ is\ closest\ to\ target_i)$$

where **prob(MOS is closest to target$_i$)** is the score provided by the model for the i's classification target.

The method of MOS estimation described in the present embodiment is linear but embodiments are not limited to a linear MOS estimation.

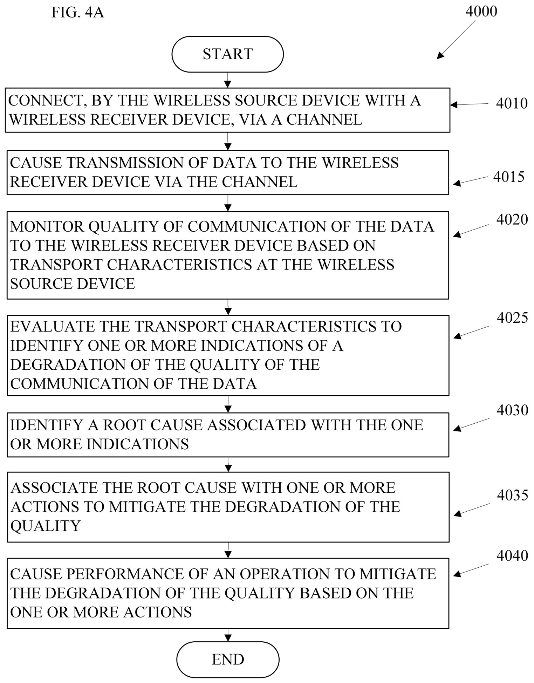

FIG. 4A depicts an embodiment of a flowchart 4000 to implement media logic circuitry such as the media logic circuitry discussed in FIGs. 1-3. At element 4010, media logic circuitry of the wireless source device (e.g., the media logic circuitry 1220 of client 1210 shown FIG. 1B) may connect, by the wireless source device with a wireless receiver device, via a channel to perform, e.g., data streaming. In some embodiments, the wireless source device may connect to the wireless receiver device by a pairing procedure to establish a BT connection. In some embodiments, the wireless source device may connect to the wireless receiver device by associating the wireless source device with the wireless receiver device to establish a Wi-Fi link or other wireless link.

The data streaming may be any type of media streaming such as voice data or audio data streaming, video streaming, or a combination thereof for, e.g., conference calls. For instance, a conference application may establish a connection between the wireless source device and the wireless receiver device to establish a video conference call. The video conference call may be a two-way data streaming exchange between a first user at the wireless source device and a second user at the wireless receiver device. In other embodiments, the video conference call may be a two-way data streaming exchange between a first user at a remote device such as the media source device(s) 1025 in FIG. 1A and a second user at the mobile device 1014 or the desktop computer 1015 wireless source device shown in FIG. 1A.

In such embodiments, each wireless link between the first user and the second user may have a wireless source device that is a source of a data stream for the purposes of data transmission over the wireless link and a wireless receiver device that is a recipient of a data stream from the wireless source device. For instance, in a two-way conference call between the laptop computer 1025 and the desktop computer 1015, in FIG. 1A, the laptop computer 1025 may a wireless source device for audio and video data streams originating at the laptop computer 1025 that transmits to the base station 1030 via a wireless link. The base station 1030 may be a wireless receiver device for this wireless link. The base station 1030 may then act as a wireless source device for retransmission of the data stream to the desktop computer 1015 and the desktop computer 1015 may be a wireless receiver device that receives the data stream from the base station 1030.

Similarly, for a second data stream that originates at the desktop computer 1015, the desktop computer 1025 may be a wireless source device and the base station 1030 may be a wireless receiver device. When the base station 1030 retransmits the second data stream over a wireless link to the laptop computer 1025, the base station 1030 acts as the wireless source device and the laptop computer 1025 acts as the wireless receiver device.

In further examples, the data streaming may comprise a one-way audio streaming of, e.g., music, and audio book, a podcast, a webcast, or the like. In such examples, the media source device(s) 1020 may transmit a data stream to, e.g., a wireless headset 1016 of a user via the mobile device 1014 or the desktop computer 1015. For situations in which the laptop device 1025 has a wired connection with the base station 1030, the base station 1030 has a wired connection with the desktop computer 1015, and the desktop computer 1015 establishes a wireless link or connection with the headset 1016, the desktop computer 1025 acts as a wireless source device and the headset 1016 acts as the wireless receiver device.

At element 4015, the media logic circuitry may cause transmission of data (e.g., a data packet of a data stream) to the wireless receiver device via the channel. At element 4020, after causing transmission of data to the wireless receiver device, the media logic circuitry of the wireless source device may monitor quality of communication of the data to the wireless receiver device based on transport characteristics at the wireless source device. The transport characteristics may include transport layer information, medium access control layer information, and physical layer information. In many embodiments, the transport characteristics may also include any other information that can be obtained at the wireless source device such as information collected from a operating system executing on the wireless source device and network information related to networks connected with the wireless source device. In many embodiments, part of the transport characteristics captured by the media logic circuitry of the desktop computer 1025 may include and account for receipt of a data stream at the desktop computer 1025 from the media source device(s) 1020. For instance, buffering overflows and underflows, retransmissions, bit error rates, and/or the like affect the quality of the transmission retransmitted from the desktop computer 1025 to the wireless headset 1016.

At element 4025, the media logic circuitry may evaluate the transport characteristics to identify one or more symptoms/indications of a degradation of the quality of the communication of the data. In some embodiments, the media logic circuitry may collect the transport characteristics over a period of time such as five minutes, two minutes, one minute, thirty seconds, 5 seconds, 3 seconds, 1 second, or the like. In many embodiments, the transport characteristics may be compared with heuristically determined thresholds to determine a severity of an impact that the transport statistic reflect on a user experience, i.e., a user receiving the data stream at the wireless receiver device. For instance, the media logic circuitry may include counters to determine a number of negative acknowledgements (NAKs) received over a period of time from the wireless receiver device and a number of acknowledgements (ACKs) received over a period of time from the wireless receiver device. The media logic circuitry may also receive information about the status of a charge on a battery that powers the wireless receiver device. In such embodiments, the media logic circuitry may compare the number of ACKs counted over the period of time with a threshold for ACKs, compare the number of NAKs counted over the period of time with a threshold for NAKs, and/or compare a ratio of the ACKs to the NAKs over the period of time with a threshold for the ratio.

The media logic circuitry may also, based on the charge level on the battery of the wireless receiver device, determine whether the charge level on the battery may have an impact on the operation of the wireless receiver device to an extent that the charge level may negatively impact user experience based on heuristic data. For instance, heuristic data gathered during lab experimentation may indicate that a charge level on the battery of the wireless headset 1016 of less than a battery level threshold (e.g., 5%, 10% 20%, or the like) may cause the headset 1016 or devices similar to the headset 1016 to incur more bit errors during reception of data transmissions and, thus, respond to data transmissions with more NAKs and less ACKs.

Based on transport characteristics and information generated based on processing the transport characteristics, the media logic circuitry may identify symptoms/indications of a quality issue associated with communication of the data to the wireless receiver. After evaluating the transport characteristics to identify one or more symptoms/indications, at element 4030, the media logic circuitry may identify a root cause associated with the one or more symptoms/indications. For instance, the media logic circuitry may determine, based on a combination of one or more symptoms/indications identified from the transport characteristics and based on heuristic and objective criteria, a root cause of the symptoms/indications. For example, if the number of NAKs received over the period of time is greater than a threshold and the battery charge level is below a first battery level threshold, the number of ACKs over the period of time is below a threshold, or the ratio of NAKs to ACKs is greater than a threshold, the media logic circuitry may determine that the low charge on the battery may be a root cause of a degradation in the quality of the communication of the data to the wireless receiver device. In some embodiments, for instance, the heuristic data may identify multiple threshold levels for the battery charge level, wherein each of the battery levels is associated with a distinct or different level of degradation of the quality of the communication of the data.

At element 4035, the media logic circuitry may associate the root cause with one or more actions to mitigate the degradation of the quality. Based on the root cause of the degradation, the media logic circuitry may associate the root cause with a set of one or more actions to perform to mitigate the degradation of the quality and to improve the quality of communication of the data to the wireless receiver device. In some embodiments, one or more of or all the actions may be performed automatically by the wireless source device. In some embodiments one or more of or all the actions may require a user to perform the actions.

After associating the root cause with one or more actions, at element 4040, the media logic circuitry may cause performance of an operation to mitigate the degradation of the quality based on the one or more actions. For example, if the media logic circuitry determines, based on a capabilities exchange or negotiation with the wireless receiver device, that a root cause of the degradation of the quality is related to use of an older version of firmware in the wireless source device, the media logic circuitry may, in some embodiments, automatically update a firmware of the wireless source device to correct the quality issue. In other embodiments, the media logic circuitry may display or otherwise present a message to the user at the wireless source device and/or at the wireless receiver device indicating that the firmware of the wireless source device should be updated to improve the quality of communication of the data from the wireless source device to the wireless receiver device. In a further example, the media logic circuitry may, based on a determination that a low battery charge (e.g., lower than a threshold) is a root cause of quality issues in the communication of the data to the wireless receiver device, the media logic circuitry may display or otherwise present a message to the user at the wireless source device and/or at the wireless receiver device indicating that the battery of the wireless receiver device should be recharged or replaced to mitigate a degradation of the quality of communication of the data to the wireless receiver device.

In some embodiments, the media logic circuity may have access to one or more statements to display and/or audibly announce to a user at the wireless source device and/or at the wireless receiver device to indicate actions to be taken by the user to mitigate a degradation in the quality of the communication of the data to the wireless receiver device. In some embodiments, the media logic circuitry may access a large language model (LLM) executing on the wireless source device, executing on a server in a local network, or executing on a remote server accessible via but external to the local network of the wireless source device, to generate a natural language statement to display and/or announce to a user based on indications of the one or more actions that the user should perform to mitigate the degradation of the quality of communication of the data.

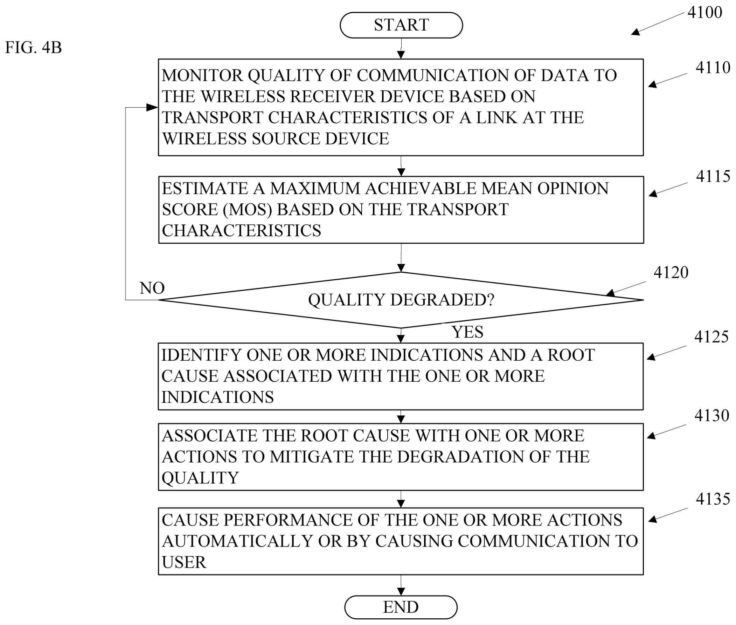

FIG. 4B depicts an embodiment of a flowchart 4100 to implement media logic circuitry such as the media logic circuitry discussed in FIGs. 1-3. At element 4110, media logic circuitry of the wireless source device (e.g., the media logic circuitry 1220 of client 1210 shown FIG. 1B) may monitor a quality of the transmission of data from a wireless source device to a wireless receiver device based on transport characteristics at the wireless source device.

At element 4115, the media logic circuitry may estimate a maximum achievable mean opinion score (MOS) based on the transport characteristics. In many embodiments, estimation of the maximum achievable MOS may involve generating an input for a machine learning model based on the transport characteristics. The machine learning model may be trained based on accumulated training data such as data collected from lab experiments or otherwise through actual performance of data streaming under known conditions for the wireless source device and for the wireless receiver device. For example, the known conditions may include wireless receiver device issues, wireless source device issues, environmental issues, transmission/reception power issues, number of retransmissions negotiated between the wireless source device and the wireless receiver device, buffer conditions of the wireless source device, buffer conditions of the wireless receiver device, network conditions, internal radio issues of the wireless source device and/or of the wireless receiver device, and latency issues with communication of the data.

At element 4120, after estimating the maximum achievable MOS transport, the media logic circuitry may determine if the maximum achievable MOS is less than a threshold MOS to determine if whether the quality of communication of the data is degraded to an extent that significantly degrades user experience (UX). The media logic circuitry may include a threshold MOS that is preset, is a user preference, or is a learned preference based on input from a user related to the user experience. For instance, if the media logic circuitry indicates that the quality of the communication of the data is impacting the UX but the user does not perceive a significant impact to the UX, the user may provide feedback to the media logic circuitry to indicate that the UX is not significantly impacted. In such embodiments, the media logic circuitry may adjust the MOS threshold to a lower MOS value based on the user feedback. In further embodiments, the user may modify a preference for the MOS threshold to lower the MOS threshold at the wireless source device.

At element 4125, for instances in which the maximum achievable MOS is less than a threshold MOS, the media logic circuitry may identify symptoms/indications associated with the transport characteristics a root cause associated with the one or more symptoms/indications, associate the root cause with one or more actions to mitigate the degradation of the quality (element 4130), and cause performance of an operation to mitigate the degradation of the quality based on the one or more actions (element 4135). For instance, the media logic circuitry may automatically perform actions to mitigate the quality issue such as increasing a transmission power, negotiating with the wireless receiver device to increase reception power, or a combination thereof. For actions that cannot be carried out without user participation, the

In other embodiments, the media logic circuitry may generate a message to display or announce to the user to indicate actions that the user may take to mitigate the quality issue or increase the quality of communication of the data. In some embodiments, the media logic circuitry of the wireless source device may provide the actions that require user participation to a large language model, receive a natural language response that includes instructions for the user to perform the actions. In further embodiments, the media logic circuitry of the wireless source device may access a set of natural language instructions for each action in memory, aggregate the instructions for the actions that require user participation, and send the instructions to the wireless receiver device to display and/or announce. In some embodiments, the media logic circuitry of the wireless source device may display and/or announce the instructions at the wireless source device, e.g., for situations in which the wireless source device is a user device such as the mobile phone 1014 and the wireless receiver device is a user device such as the wireless headset 1016.

FIG. 5 shows a functional diagram of an exemplary communication station 500, in accordance with one or more example embodiments of the present disclosure. In one embodiment, FIG. 5 illustrates a functional block diagram of a wireless source device or wireless receiver device that may be suitable for use as a base station 1030 (FIG. 1A) or one of the user device(s) 1010, such as the mobile phone 1014 (FIG. 1A) in accordance with some embodiments. The communication station 500 may also be suitable for use as other user device(s) 1010 such as the user devices 1015, 1016, and/or 1017. The user devices 1014, 1015, 1016, and/or 1017 may include, e.g., a handheld device, a mobile device, a cellular telephone, a smartphone, a tablet, a netbook, a wireless terminal, a laptop computer, a workstation, a wearable computer device, a headset, a wireless speaker, a femtocell, a high data rate (HDR) subscriber station, an access point, an access terminal, or other personal communication system (PCS) device.

The communication station 500 may include communications circuitry 502 and a transceiver 510 for transmitting and receiving signals to and from other communication stations using one or more antennas 501. The communications circuitry 502 may include circuitry that can operate the physical layer (PHY) communications and/or link layer communications for controlling access to the wireless medium, and/or any other communications layers for transmitting and receiving signals. The communication station 500 may also include processing circuitry 506 and memory 508 arranged to perform the operations described herein. In some embodiments, the communications circuitry 502 and the processing circuitry 506 may be configured to perform operations detailed in the above discussion in conjunction with the figures.

In accordance with some embodiments, the communications circuitry 502 may be arranged to contend for a wireless medium and configure frames or packets for communicating over the wireless medium. The communications circuitry 502 may be arranged to transmit and receive signals. In many embodiments, the communications circuitry 502 may include media logic circuitry to mitigate quality issues related to communication of streaming media such as voice quality for streaming audio, video quality for streaming video, or both for, e.g., conference applications as a wireless source device and/or a wireless receiver device.

The communications circuitry 502 may also include circuitry for modulation/demodulation, upconversion/down-conversion, filtering, amplification, etc. In some embodiments, the processing circuitry 506 of the communication station 500 may include one or more processors. In other embodiments, two or more antennas 501 may be coupled to the communications circuitry 502 arranged for sending and receiving signals. The memory 508 may store information for configuring the processing circuitry 506 to perform operations for configuring and transmitting message frames and performing the various operations described herein. The memory 508 may include any type of memory, including non-transitory memory, for storing information in a form readable by a machine (e.g., a computer). For example, the memory 508 may include a computer-readable storage device, read-only memory (ROM), random-access memory (RAM), magnetic disk storage media, optical storage media, flash-memory devices and other storage devices and media.

In some embodiments, the communication station 500 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 500 may include one or more antennas 501. The antennas 501 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 500 may include one or more of a keyboard, a display, a non-volatile memory port, multiple antennas, a graphics processor, an application processor, speakers, and other mobile device elements. The display may be an LCD screen including a touch screen.

Although the communication station 500 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 500 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 500 may include one or more processors and may be configured with instructions stored on a computer-readable storage device.

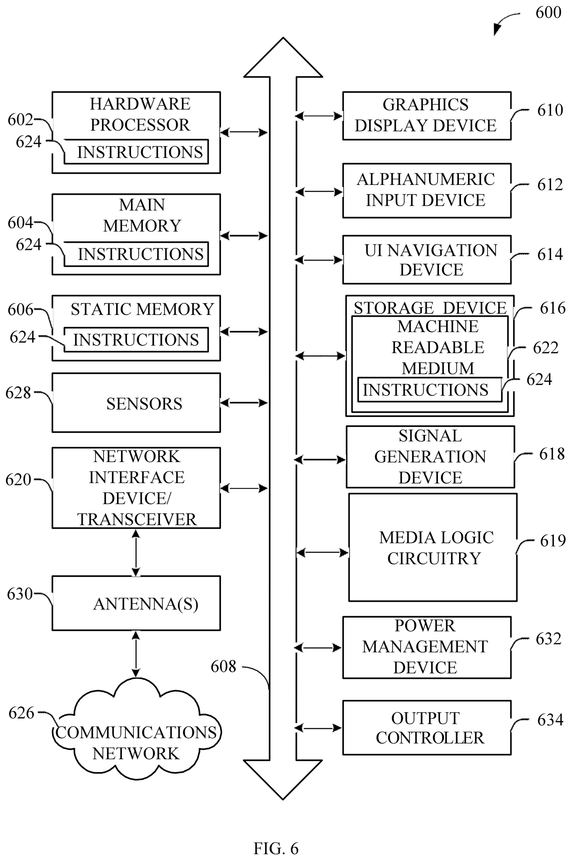

FIG. 6 illustrates a block diagram of an example of a machine 600 or system upon which any one or more of the techniques (e.g., methodologies) for mitigating media quality degradation and/or improving media quality based on transport characteristics, as discussed herein, may be performed. For instance, the machine may comprise an access point (AP) or base station such as the base station 1030, media source device(s) 1020, and/or one of the user devices 1010 shown in FIG. 1A. In other embodiments, the machine 600 may operate as a standalone device or may be connected (e.g., networked) to other machines. In a networked deployment, the machine 600 may operate in the capacity of a server machine, a client machine, or both in server-client network environments. In an example, the machine 600 may act as a peer machine in peer-to-peer (P2P) (or other distributed) network environments. The machine 600 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the execution units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 600 may include a hardware processor 602 (e.g., a central processing unit (CPU), a graphics processing unit (GPU), a hardware processor core, or any combination thereof), a main memory 604 and a static memory 606, some or all of which may communicate with each other via one or more interlinks (e.g., buses or high-speed interconnects) 608. Note that the single set of interlinks 608 may be representative of the physical interlinks in some embodiments but is representative of communication paths rather than physical interlinks in other embodiments. For example, the main memory 604 may couple directly with the hardware processor 602 via high-speed interconnects or a main memory bus. The high-speed interconnects typically connect two devices, and the bus is generally designed to interconnect two or more devices and include an arbitration scheme to provide fair access to the bus by the two or more devices.

The machine 600 may further include a power management device 632, a graphics display device 610, an alphanumeric input device 612 (e.g., a keyboard), and a user interface (UI) navigation device 614 (e.g., a mouse). In an example, the graphics display device 610, alphanumeric input device 612, and UI navigation device 614 may be a touch screen display. The machine 600 may additionally include a storage device (i.e., drive unit) 616, a signal generation device 618 (e.g., a speaker), a media logic circuitry 619, a network interface device/transceiver 620 coupled to antenna(s) 630, and one or more sensors 628, such as a global positioning system (GPS) sensor, a compass, an accelerometer, or other sensor. The machine 600 may include an output controller 634, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor such as the baseband processing circuitry 1218 and/or 1248 shown in FIG. 1B. The baseband processor may be configured to generate corresponding baseband signals. The baseband processor may further include physical layer (PHY) and medium access control layer (MAC) circuitry, and may further interface with the hardware processor 602 for generation and processing of the baseband signals and for controlling operations of the main memory 604, the storage device 616, and/or the media logic circuitry 619. The baseband processor may be provided on a single radio card, a single chip, or an integrated circuit (IC).

In some embodiments, the baseband processor may execute code for a multiple MAC station management entity (MM-SME) to manage multiple stations within a single multi-link device (MLD), a station management entity (SME) to manage MAC and PHY layer functionalities for a single station in a MLD or a single link device, a MAC layer management entity (MLME) to manage MAC layer functionality of a single station in a MLD or a single link device, and a physical layer (PHY) management entity (PLME) to manage PHY functionality of a single station in a MLD or a single link device. The MM-SE, for instance, may manage interactions and communications between multiple stations and a SME may manage interactions and communications between a MLME and a PLME within a single station.

The storage device 616 may include a machine readable medium 622 on which is stored one or more sets of data structures or instructions 624 (e.g., software) embodying or utilized by any one or more of the techniques or functions described herein. The instructions 624 may also reside, completely or at least partially, within the main memory 604, within the static memory 606, or within the hardware processor 602 during execution thereof by the machine 600. In an example, one or any combination of the hardware processor 602, the main memory 604, the static memory 606, or the storage device 616 may constitute machine-readable media.

The media logic circuitry 619 may carry out or perform any of the operations and processes in relation to media quality mitigation and improvement between a wireless source device and a wireless receiver device (e.g., flowchart 4000 shown in FIG. 4A, and flowchart 4100 shown in FIG. 4B) described and shown above. It is understood that the above are only a subset of what the media logic circuitry 619 may be configured to perform and that other functions included throughout this disclosure may also be performed by the media logic circuitry 619.

While the machine-readable medium 622 is illustrated as a single medium, the term "machine-readable medium" may include a single medium or multiple media (e.g., a centralized or distributed database, and/or associated caches and servers) configured to store the one or more instructions 624.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 600 and that cause the machine 600 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 624 may further be transmitted or received over a communications network 626 using a transmission medium via the network interface device/transceiver 620 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, and peer-to-peer (P2P) networks, among others. In an example, the network interface device/transceiver 620 may include one or more physical jacks (e.g., Ethernet, coaxial, or phone jacks) or one or more antennas to connect to the communications network 626. In an example, the network interface device/transceiver 620 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 600 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

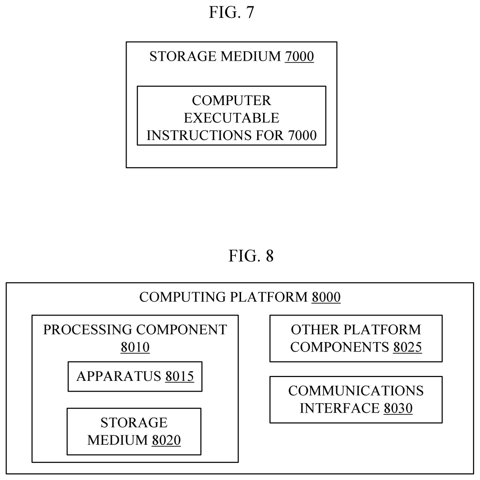

FIG. 7 illustrates an example of a storage medium 7000 to store media logic such as logic to implement the media logic circuitry 619 shown in FIG. 6 and/or the other logic discussed herein to mitigate media quality issues and improve media quality based on transport characteristics automatically and/or based on communication of one or more actions to a user. Storage medium 7000 may comprise an article of manufacture. In some examples, storage medium 7000 may include any non-transitory computer readable medium or machine-readable medium, such as an optical, magnetic or semiconductor storage. Storage medium 7000 may store diverse types of computer executable instructions, such as instructions to implement logic flows and/or techniques described herein. Examples of a computer readable or machine-readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like.

FIG. 8 illustrates an example computing platform 8000 such as the media source device(s) 1020, the base station 1030, and the user device(s) 1010 in FIG. 1A and the media source device 2020, the wireless source devices 1210 and 2030, and the wireless receiver devices 1230 and 2040 in FIGs. 1B and 2. In some examples, as shown in FIG. 8, computing platform 8000 may include a processing component 8010, other platform components or a communications interface 8030 such as the wireless network interfaces 1222 and 1252 shown in FIG. 1B. According to some examples, computing platform 8000 may be a computing device such as a server in a system such as a data center or server farm that supports a manager or controller for managing configurable computing resources as mentioned above.

According to some examples, processing component 8010 may execute processing operations or logic for apparatus 8015 described herein. Processing component 8010 may include various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits (ICs), application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements, which may reside in the storage medium 8020, may include software components, programs, applications, computer programs, application programs, device drivers, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. While discussions herein describe elements of embodiments as software elements and/or hardware elements, decisions to implement an embodiment using hardware elements and/or software elements may vary in accordance with any number of design considerations or factors, such as desired computational rate, power levels, heat tolerances, processing cycle budget, input data rates, output data rates, memory resources, data bus speeds and other design or performance constraints.

In some examples, other platform components 8025 may include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., universal serial bus (USB) memory), solid state drives (SSD) and any other type of storage media suitable for storing information.

In some examples, communications interface 8030 may include logic and/or features to support a communication interface. For these examples, communications interface 8030 may include one or more communication interfaces that operate according to various communication protocols or standards to communicate over direct or network communication links. Direct communications may occur via use of communication protocols or standards described in one or more industry standards (including progenies and variants) such as those associated with the Peripheral Component Interconnect (PCI) Express specification. Network communications may occur via use of communication protocols or standards such as those described in one or more Ethernet standards promulgated by the Institute of Electrical and Electronics Engineers (IEEE). For example, one such Ethernet standard may include IEEE 802.3-2012, Carrier sense Multiple access with Collision Detection (CSMA/CD) Access Method and Physical Layer Specifications, Published in December 2012 (hereinafter "IEEE 802.3"). Network communication may also occur according to one or more OpenFlow specifications such as the OpenFlow Hardware Abstraction API Specification. Network communications may also occur according to Infiniband Architecture Specification, Volume 1, Release 1.3, published in March 2015 ("the Infiniband Architecture specification").

Computing platform 8000 may be part of a computing device that may be, for example, a server, a server array or server farm, a web server, a network server, an Internet server, a workstation, a mini-computer, a main frame computer, a supercomputer, a network appliance, a web appliance, a distributed computing system, multiprocessor systems, processor-based systems, or combination thereof. Accordingly, various embodiments of the computing platform 8000 may include or exclude functions and/or specific configurations of the computing platform 8000 described herein.

The components and features of computing platform 8000 may comprise any combination of discrete circuitry, ASICs, logic gates and/or single chip architectures. Further, the features of computing platform 8000 may comprise microcontrollers, programmable logic arrays and/or microprocessors or any combination of the foregoing where suitably appropriate. Note that hardware, firmware and/or software elements may be collectively or individually referred to herein as "logic".

One or more aspects of at least one example may comprise representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that make the logic or processor.

Some examples may include an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner, or syntax, for instructing a machine, computing device or system to perform a certain function. The instructions may be implemented using any suitable high-level, low-level, object-oriented, visual, compiled and/or interpreted programming language.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

Processing circuitry, logic circuitry, devices, and interfaces herein described may perform functions implemented in hardware and may also, or alternatively, perform functions implemented with code executed on one or more processors. Processing circuitry, or logic circuitry, refers to the hardware or the hardware and code that implements one or more logical functions or operations. Circuitry is hardware and may refer to one or more circuits. Each circuit may perform a particular function. A circuit of the circuitry may comprise discrete electrical components interconnected with one or more conductors, an integrated circuit, a chip comprising one or more integrated circuits, a chip package comprising one or more chips in an integrated package, a chip set comprising one or more chip packages or one or more chips, memory comprising one or more memory circuits, or the like. Integrated circuits include circuits created on a substrate such as a silicon wafer and may comprise components. And integrated circuits, processing circuitry, processor packages comprising one or more processors in integrated packages, chip packages, and chipsets may comprise one or more processors, wherein each of the one or more processors comprises one or more processor cores.

ADVANTAGES OF SOME EMBODIMENTS

Several embodiments have one or more potentially advantages effects. For instance, use of media logic circuitry, advantageously monitors quality of communication of the medium data to the wireless receiver device based on transport characteristics at the wireless source device; evaluates the transport characteristics to identify one or more symptoms (or indications) of a problem with the quality of the communication of the medium data; determines an upper limit for an achievable mean opinion score (MOS) based on the transport characteristics; detects a degradation of the quality at the wireless receiver device based on the achievable MOS and, depending on the severity of the degradation, may proceed to identify symptoms (or indications) associated with the transport characteristics and to cause performance of an operation to mitigate a detected degradation of the quality. Use of media logic circuitry advantageously implements a machine learning model and/or a statistical model to estimate a MOS. The machine learning model may advantageously infer a probability of a MOS based on transport characteristics (transport layer and/or lower radio layer statistics) at the wireless source device. The statistical model may advantageously calculate an estimated MOS based on the probability of the MOS. Use of media logic circuitry may advantageously associate a root cause with a quality issue based on transport characteristics at the wireless source device. Use of media logic circuitry may advantageously associate the root cause of a quality issue with specific action(s) to perform to mitigate the quality issue and improve the media quality received at a wireless receiver device. Use of media logic circuitry may advantageously implement mitigation actions automatically and/or communicate an indication of the specific action(s) to a user to facilitate improvement of the media quality.

EXAMPLES OF FURTHER EMBODIMENTS

The following examples pertain to further embodiments. Specifics in the examples may be used anywhere in one or more embodiments.

Example 1 is an apparatus comprising a memory; and circuitry of a wireless source device coupled with the memory to connect, by the wireless source device with a wireless receiver device, via a channel; cause transmission of data to the wireless receiver device via the channel; monitor quality of communication of the data to the wireless receiver device based on transport characteristics at the wireless source device; evaluate the transport characteristics to identify one or more indications of a degradation of the quality of the communication of the data; identify a root cause associated with the one or more indications; associate the root cause with one or more actions to mitigate the degradation of the quality; and cause performance of an operation to mitigate the degradation of the quality based on the one or more actions. In Example 2, the apparatus of Example 1, wherein the circuitry comprises baseband processing circuitry and further comprising a radio coupled with the baseband processing circuitry, and one or more antennas coupled with the radio to transmit the data. In Example 3, the apparatus of Example 1, wherein the data comprises audio data, video data, or a combination of audio data and video data, wherein the data comprises a packet of a data stream, wherein the transport characteristics comprise transport layer statistics and lower layer statistics. In Example 4, the apparatus of Example 1, the evaluation of the transport characteristics to determine an upper limit for an achievable mean opinion score (MOS) based on the transport characteristics; and if the upper limit for the achievable MOS is less than a threshold MOS, identify indications associated with the upper limit for the achievable MOS. In Example 5, the apparatus of Example 4, the determination of the upper limit for the achievable MOS to input indications of the transport characteristics into a machine learning model and estimate a maximum achievable MOS via a statistical model based on an output of the machine learning model. In Example 6, the apparatus of Example 5, the machine learning model to infer a probability of a maximum achievable MOS, wherein the machine learning model is trained and validated with transport characteristics captured for training and heuristic data. In Example 7, the apparatus of Example 5, the statistical model to calculate an estimate for the maximum achievable MOS based on the probability of the maximum achievable MOS. In Example 8, the apparatus of Example 1, wherein performance of the operation to mitigate the degradation of the quality comprises automatically performing an action of the one or more actions to mitigate the degradation of the quality. In Example 9, the apparatus of Example 8, wherein performance of the operation to mitigate the degradation of the quality comprises communicating with a large language model (LLM) to determine natural language for the one or more actions to address the degradation of the quality, causing transmission of an indication of an action of the one or more actions via the channel to the wireless receiver device, causing display of an action of the one or more actions at the wireless receiver device, causing display of an action of the one or more actions at the wireless source device, or a combination thereof.

Example 10 is a non-transitory computer-readable medium, comprising instructions, which when executed by a processor, cause the processor to perform operations to cause transmission of data from a wireless source device to a wireless receiver device; monitor a quality of the transmission to the wireless receiver device based on transport characteristics at the wireless source device; evaluate the transport characteristics to identify one or more indications of a degradation of the quality of the transmission; identify a root cause associated with the one or more indications; associate the root cause with one or more actions to mitigate the degradation of the quality; and cause performance of an operation to mitigate the degradation of the quality based on the one or more actions. In Example 11, the non-transitory computer-readable medium of Example 10, wherein the data comprises audio data, video data, or a combination of audio data and video data, wherein the data comprises a packet of a data stream, wherein the transport characteristics comprise transport layer statistics and lower layer statistics. In Example 12, the non-transitory computer-readable medium of Example 11, wherein operations to evaluate the transport characteristics comprise operations to determine a maximum achievable mean opinion score (MOS) based on the transport characteristics; and if the maximum achievable MOS is less than a threshold MOS, identify indications associated with the transport characteristics. In Example 13, the non-transitory computer-readable medium of Example 10, the operations to determine the maximum achievable MOS to input indications of the transport characteristics into a machine learning model and estimate the maximum achievable MOS via a statistical model and an output of the machine learning model. In Example 14, the non-transitory computer-readable medium of Example 13, the machine learning model to infer a probability associated with the maximum achievable MOS, wherein the machine learning model is trained and validated with the transport characteristics captured for training and heuristic data. In Example 15, the non-transitory computer-readable medium of Example 14, the statistical model to calculate an estimate for the maximum achievable MOS based on the probability. In Example 16, the non-transitory computer-readable medium of Example 10, the performance of the operation to mitigate the degradation of the quality to automatically perform at least one of the one or more actions to mitigate the degradation of the quality, and to communicate with a large language model (LLM) to determine natural language for one or more actions to address the degradation of the quality, cause transmission of an indication of one or more actions to the wireless receiver device, cause display of at least one of the one or more actions at the wireless receiver device, cause display of at least one of the one or more actions at the wireless source device, or a combination thereof.

Example 17 is a method comprising monitoring a quality of communication of data by a wireless source device to a wireless receiver device based on transport characteristics at the wireless source device; evaluating the transport characteristics to identify one or more indications of a degradation of the quality of the communication of the data; identifying a root cause associated with the one or more indications; associating the root cause with one or more actions to mitigate the degradation of the quality; and causing performance of an operation to mitigate the degradation of the quality based on the one or more actions. In Example 18, the method of Example 16, wherein the data comprises audio data, video data, or a combination of audio data and video data, wherein the data comprises a packet of a data stream, wherein the transport characteristics comprise transport layer statistics and lower layer statistics. In Example 19, the method of Example 17, wherein evaluating of the transport characteristics comprises determining an upper limit for an achievable mean opinion score (MOS) based on the transport characteristics; and if the upper limit for the achievable MOS is less than a threshold MOS, identifying indications associated with the transport characteristics. In Example 20, the method of Example 19, wherein determining the upper limit for the achievable MOS comprises inputting indications of the transport characteristics into a machine learning model and estimating a maximum achievable MOS via a statistical model and based on an output of the machine learning model.

Example 21 is an apparatus comprising a means for any action in Examples 1-20.

**Claims**

1. An apparatus comprising:

   a means for connecting, by the wireless source device with a wireless receiver device, via a channel;
   a means for causing transmission of data to the wireless receiver device via the channel;
   a means for monitoring a quality of communication of the data to the wireless receiver device based on transport statistics at the wireless source device;
   a means for evaluating the transport statistics to identify one or more symptoms of a degradation of the quality of the communication of the data;
   a means for identifying a root cause associated with the one or more symptoms;
   a means for associating the root cause with one or more actions to mitigate the degradation of the quality; and
   a means for causing performance of an operation to mitigate the degradation of the quality based on the one or more actions.

2. The apparatus of claim 1, wherein the means for connecting comprises baseband processing circuitry and further comprises a radio coupled with the baseband processing circuitry, and one or more antennas coupled with the radio to transmit the data.

3. The apparatus of claim 1, wherein the data comprises audio data, video data, or a combination of audio data and video data, wherein the data comprises a packet of a data stream, wherein the transport statistics comprise transport layer statistics and lower layer statistics.

4. The apparatus of claim 1, the evaluation of the transport statistics to:

   determine an upper limit for an achievable mean opinion score (MOS) based on the transport statistics; and
   if the upper limit for the achievable MOS is less than a threshold MOS, identify symptoms associated with the upper limit for the achievable MOS.

5. The apparatus of claim 4, the determination of the upper limit for the achievable MOS to:

   input indications of the transport statistics into a machine learning model and
   estimate a maximum achievable MOS via a statistical model based on an output of the machine learning model.

6. The apparatus of claim 5, the machine learning model to infer a probability of a maximum achievable MOS, wherein the machine learning model is trained and validated with transport statistics captured for training and heuristic data.

7. The apparatus of claim 5, the statistical model to calculate an estimate for the maximum achievable MOS based on the probability of the maximum achievable MOS.

8. The apparatus of any one of claims 1-7, wherein performance of the operation to mitigate the degradation of the quality comprises automatically performing an action of the one or more actions to mitigate the degradation of the quality.

9. The apparatus of claim 8, wherein performance of the operation to mitigate the degradation of the quality comprises communicating with a large language model (LLM) to determine natural language for the one or more actions to address the degradation of the quality, causing transmission of an indication of an action of the one or more actions via the channel to the wireless receiver device, causing display of an action of the one or more actions at the wireless receiver device, causing display of an action of the one or more actions at the wireless source device, or a combination thereof.

10. A non-transitory computer-readable medium, comprising instructions, which when executed by a processor, cause the processor to perform operations to:

   cause transmission of data from a wireless source device to a wireless receiver device;
   monitor a quality of the transmission to the wireless receiver device based on transport statistics at the wireless source device;

evaluate the transport statistics to identify one or more symptoms of a degradation of the quality of the transmission;

identify a root cause associated with the one or more symptoms;

associate the root cause with one or more actions to mitigate the degradation of the quality; and

cause performance of an operation to mitigate the degradation of the quality based on the one or more actions.

11. The non-transitory computer-readable medium of claim 10, wherein the data comprises audio data, video data, or a combination of audio data and video data, wherein the data comprises a packet of a data stream, wherein the transport statistics comprise transport layer statistics and lower layer statistics.

12. The non-transitory computer-readable medium of claim 11, wherein operations to evaluate the transport statistics comprise operations to:

determine a maximum achievable mean opinion score (MOS) based on the transport statistics; and

if the maximum achievable MOS is less than a threshold MOS, identify symptoms associated with the transport statistics.

13. The non-transitory computer-readable medium of claim 10, the operations to determine the maximum achievable MOS to:

input indications of the transport statistics into a machine learning model and

estimate the maximum achievable MOS via a statistical model and an output of the machine learning model.

14. The non-transitory computer-readable medium of claim 13, the machine learning model to infer a probability associated with the maximum achievable MOS, wherein the machine learning model is trained and validated with the transport statistics captured for training and heuristic data, and the statistical model to calculate an estimate for the maximum achievable MOS based on the probability.

15. The non-transitory computer-readable medium of any one of claims 10-14, the performance of the operation to mitigate the degradation of the quality to:

automatically perform at least one of the one or more actions to mitigate the degradation of the quality, and to:

communicate with a large language model (LLM) to determine natural language for one or more actions to address the degradation of the quality,

cause transmission of an indication of one or more actions to the wireless receiver device,

cause display of at least one of the one or more actions at the wireless receiver device, cause display of at least one of the one or more actions at the wireless source device, or a combination thereof.

FIG. 1A

1000

USER
DEVICE(S)
1010

1014

NETWORK(S)
1032

1030

1025

1015

1016

USER
DEVICE(S)
1010

NETWORK(S)
1018

1017

MEDIA
SOURCE
DEVICE(S)
1020

USER(S)1008

EP 4 765 753 A1

1200

**WIRELESS SOURCE DEVICE  1210**

WIRELESS COMMUNICATIONS I/F
(HOST CONTROLLER) 1216

PROCESSOR(S) 1201
(INCL. MEDIA LOGIC
CIRCUITRY 1220)

TSF TIMER 1205

MEMORY 1211

HEURISTIC
DATA        1212

MEDIA LOGIC 1220
CIRCUITRY

BASEBAND        1218
PROCESSING CIRCUITRY

MEDIA LOGIC
CIRCUITRY 1220

WIRELESS
NETWORK
INTERFACE
1222

RADIO
1224

FEM
1226

ANT
1228

SCREEN 1229

NETWORK
1280

AUDIO
SOURCE
DEVICE
1290

**WIRELESS RECEIVER DEVICE 1230**

WIRELESS COMMUNICATIONS I/F
(RECEIVER CONTROLLER) 1246

PROCESSOR(S) 1231
(INCL. MEDIA LOGIC
CIRCUITRY 1250)

TSF TIMER 1235

MEMORY 1241

HEURISTIC
DATA        1242

MEDIA LOGIC 1250
CIRCUITRY

BASEBAND        1248
PROCESSING CIRCUITRY

MEDIA LOGIC
CIRCUITRY 1250

WIRELESS
NETWORK
INTERFACE
1252

RADIO
1254

FEM
1256

ANT
1258

FIG. 1B

EP 4 765 753 A1

RADIO ARCHITECTURE 1300
(SUCH AS WIRELESS INTERFACE
1222 OR 1252)

FIG. 1C

FEM
CIRCUITRY
1400

FRONT END MODULE CIRCUITRY   1404A

TO/FROM
ANTENNA

TX/RX
SWITCH
1402

1403

DUPLEXER
1404

2.4   1406

5   1406

6   1406

TO
RADIO IC
1407

1415

DUPLEXER
1414

2.4   FILTER
1412   1410

5   FILTER
1412   1410

6   FILTER
1412   1410

FROM
RADIO IC
1409

FIG. 1D

RADIO IC CIRCUITRY   1506A

FROM
FRONT END
MODULE
1407

1502   1506

FILTER
1508

TO BASEBAND
PROCESSSING
CIRCUITRY 1507

1505

SYNTHESIZER
1504

1505

TO FRONT
END MODULE
1409

1514

FILTER
1512

FROM BASEBAND
PROCESSSING
CIRCUITRY 1511

FIG. 1E

FIG. 1F

RX BASEBAND PROCESSOR 1602

CONTROL LOGIC CIRCUITRY 1606

TX BASEBAND PROCESSOR 1604

ADC 1610

DAC 1612

RX 1507

TX 1511

BASEBAND PROCESSING CIRCUITRY 1308A

EP 4 765 753 A1

FIG. 2

2000

| MEDIA SOURCE DEVICE 2020 | | WIRELESS SOURCE DEVICE 2030 | | WIRELESS RECEIVER DEVICE 2040 |

INITIATE MEDIA SERVICE 2022

TRANSMIT MEDIA STREAM 2024

CONNECT 2032

EVALUATE TRANSPORT CHARACTERISTICS 2034

DETERMINE MAX MOS 2035

COMMUNICATE MEDIUM DATA 2036

DETECT DEGRADATION 2038

IDENTIFY ROOT CAUSE OF THE DEGRADATION 2040

AUTOCORRECT AND/OR NOTIFY USER 2042

FIG. 3A

3000

**Host Components**

Call/Media Application

Bluetooth Service

BT Protocol

BT Driver

BT Transport

Audio Service

Audio Driver

Audio DSP

AudioTransport

COUNTER COLLECTIONS FROM
VARIOUS BLOCKS TO
CHARACTERIZE CATEGORIES
INCLUDING BUT NOT LIMITED TO:

BUFFERING, SCHEDULING, RADIO
INTERFERENCE, PACKET
STATISTICS, AND/OR THE LIKE

BLUETOOTH CONTROLLER

Transport Layer

BT Scheduler

BT Link Layer

BT PHY/Radio

AUDIO TRANSFER

EP 4 765 753 A1

FIG. 3B

3100

Wi-Fi, IP

MS TEAMS

Wi-Fi, IP

Dataset

BT Statistics
every 5 seconds

BT Interference

outgoing voice

incoming voice

Side A

incoming voice

outgoing voice

Side B

POLQA MOS

Comparing:
A input ←→ B output
B input ←→ A output

EP 4 765 753 A1

FIG. 3C

3200

| MOS | HOST PKT | OTA TX | NO RX PAYLOAD LOST | NO TX PAYLOAD LOST | NO SYNC | HEC | CRC | TX INSERTED | TX DROPPED | MUTED SAMPLES | PLC INSERT | NAKs | PLATFORM NOISE | RSSI VALUE | CODEC |
|---|---|---|---|---|---|---|---|---|---|---|---|---|---|---|---|
| 4.435 | 3998 | 667.0 | 31 | 0 | 7 | 0 | 235 | 0 | 0 | 0 | 31 | 179 | 32767 | -93.25 | WBS |
| 3.180 | 1999 | 666.0 | 85 | 3 | 7 | 0 | 189 | 0 | 0 | 0 | 85 | 194 | 32767 | -92.00 | NBS |
| 3.304 | 1999 | 667.0 | 64 | 0 | 2 | 0 | 152 | 0 | 0 | 0 | 64 | 48 | 32767 | -93.50 | NBS |
| 4.091 | 3998 | 666.0 | 215 | 5 | 115 | 3 | 410 | 0 | 0 | 0 | 215 | 264 | 32767 | -94.50 | WBS |
| 3.337 | 1999 | 667.0 | 169 | 2 | 14 | 0 | 321 | 0 | 0 | 0 | 169 | 105 | 32767 | -93.00 | NBS |

FIG. 3D

3300

Real MOS vs. Estimated

Legend:
- XGBoost
- Linear Regression
- Support Vector Machine
- Logistic Regression
- Average of All Models
- Prefect Estimation

Estimated MOS

Real MOS

FIG. 3E

3400

| ROOT MEAN SQUARED ERROR (RMSE) | | |
|---|---|---|
| MODEL 1: | 0.20982875503177054 | XGBoost |
| MODEL 2: | 0.195927873476203 | LINEAR REGRESSION |
| MODEL 3: | 0.18022794360204013 | SUPPORT VECTOR MACHINE |
| MODEL 4: | 0.17847626873278757 | LOGISTIC REGRESSION |
| AVERAGE | 0.1812723801299843 | |

FIG. 4A — 4000

START

CONNECT, BY THE WIRELESS SOURCE DEVICE WITH A WIRELESS RECEIVER DEVICE, VIA A CHANNEL — 4010

CAUSE TRANSMISSION OF DATA TO THE WIRELESS RECEIVER DEVICE VIA THE CHANNEL — 4015

MONITOR QUALITY OF COMMUNICATION OF THE DATA TO THE WIRELESS RECEIVER DEVICE BASED ON TRANSPORT CHARACTERISTICS AT THE WIRELESS SOURCE DEVICE — 4020

EVALUATE THE TRANSPORT CHARACTERISTICS TO IDENTIFY ONE OR MORE INDICATIONS OF A DEGRADATION OF THE QUALITY OF THE COMMUNICATION OF THE DATA — 4025

IDENTIFY A ROOT CAUSE ASSOCIATED WITH THE ONE OR MORE INDICATIONS — 4030

ASSOCIATE THE ROOT CAUSE WITH ONE OR MORE ACTIONS TO MITIGATE THE DEGRADATION OF THE QUALITY — 4035

CAUSE PERFORMANCE OF AN OPERATION TO MITIGATE THE DEGRADATION OF THE QUALITY BASED ON THE ONE OR MORE ACTIONS — 4040

END

FIG. 4B

START — 4100

MONITOR QUALITY OF COMMUNICATION OF DATA TO THE WIRELESS RECEIVER DEVICE BASED ON TRANSPORT CHARACTERISTICS OF A LINK AT THE WIRELESS SOURCE DEVICE — 4110

ESTIMATE A MAXIMUM ACHIEVABLE MEAN OPINION SCORE (MOS) BASED ON THE TRANSPORT CHARACTERISTICS — 4115

QUALITY DEGRADED? — 4120

NO

YES

IDENTIFY ONE OR MORE INDICATIONS AND A ROOT CAUSE ASSOCIATED WITH THE ONE OR MORE INDICATIONS — 4125

ASSOCIATE THE ROOT CAUSE WITH ONE OR MORE ACTIONS TO MITIGATE THE DEGRADATION OF THE QUALITY — 4130

CAUSE PERFORMANCE OF THE ONE OR MORE ACTIONS AUTOMATICALLY OR BY CAUSING COMMUNICATION TO USER — 4135

END

500

501

510

TRANSCEIVER

COMMUNICATIONS CIRCUITRY 502

MEMORY 508

506

PROCESSING CIRCUITRY

FIG. 5

EP 4 765 753 A1

600

| 602 | HARDWARE PROCESSOR |
| 624 | INSTRUCTIONS |

| 604 | MAIN MEMORY |
| 624 | INSTRUCTIONS |

| 606 | STATIC MEMORY |
| 624 | INSTRUCTIONS |

628 — SENSORS

620 — NETWORK INTERFACE DEVICE/ TRANSCEIVER

630 — ANTENNA(S)

626 — COMMUNICATIONS NETWORK

608

GRAPHICS DISPLAY DEVICE — 610

ALPHANUMERIC INPUT DEVICE — 612

UI NAVIGATION DEVICE — 614

STORAGE DEVICE — 616
MACHINE READABLE MEDIUM — 622
INSTRUCTIONS — 624

SIGNAL GENERATION DEVICE — 618

MEDIA LOGIC CIRCUITRY — 619

POWER MANAGEMENT DEVICE — 632

OUTPUT CONTROLLER — 634

FIG. 6

46

FIG. 7

STORAGE MEDIUM <u>7000</u>

COMPUTER
EXECUTABLE
INSTRUCTIONS FOR 7000

FIG. 8

COMPUTING PLATFORM <u>8000</u>

PROCESSING COMPONENT
<u>8010</u>

APPARATUS <u>8015</u>

STORAGE
MEDIUM <u>8020</u>

OTHER PLATFORM
COMPONENTS <u>8025</u>

COMMUNICATIONS
INTERFACE <u>8030</u>

Europäisches
Patentamt

European
Patent Office

Office européen
des brevets

# EUROPEAN SEARCH REPORT

**Application Number**

EP 25 21 5201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/171046 A1 (FLOOD STEPHEN PAUL [US] ET AL) 15 June 2017 (2017-06-15) <br> * paragraph [0010] * <br> * paragraph [0024] - paragraph [0025] * <br> * paragraph [0032] - paragraph [0035] * <br> * figures 1A-1H * <br> ----- | 1-3, 8-11,15 | INV. <br> H04L41/0654 <br> H04L41/5025 <br> H04L41/5067 <br> H04W24/02 <br> H04W24/04 <br> H04L12/18 |
| X <br> Y | WO 2023/175673 A1 (NEC CORP [JP]) 21 September 2023 (2023-09-21) <br> * the whole document * <br><br> & US 2025/096914 A1 (MARUYAMA SHOHEI [JP] ET AL) 20 March 2025 (2025-03-20) <br> * paragraph [0009] * <br> * paragraph [0033] - paragraph [0036] * <br> * paragraph [0050] - paragraph [0054] * <br> * paragraph [0061] * <br> * paragraph [0068] * <br> * paragraph [0071] * <br> * paragraph [0082] - paragraph [0087] * <br> * paragraph [0109] - paragraph [0112] * <br> ----- | 1,3,8, 10,11 <br> 4-7, 12-14 | H04B17/309 <br> H04W4/80 <br><br> ADD. <br> H04L41/0631 <br> H04L51/224 <br> H04L41/142 <br> H04L41/147 <br> H04L41/16 <br> H04L41/5009 <br> H04L41/50 |
| Y | US 2006/252376 A1 (FOK KENNY [US] ET AL) 9 November 2006 (2006-11-09) <br> * paragraph [0006] * <br> * paragraph [0009] * <br> * paragraph [0038] - paragraph [0039] * <br> * paragraph [0061] - paragraph [0065] * <br> ----- | 4-7, 12-14 | **TECHNICAL FIELDS SEARCHED (IPC)** <br> H04W <br> H04L <br> H04B |
| A | US 2022/334906 A1 (PATIL VIJAYALAXMI [IN] ET AL) 20 October 2022 (2022-10-20) <br> * paragraph [0010] - paragraph [0013] * <br> * paragraph [0055] - paragraph [0067] * <br> * paragraph [0073] - paragraph [0077] * <br> ----- | 1-15 | |

The present search report has been drawn up for all claims

| Place of search | Date of completion of the search | Examiner |
|---|---|---|
| Munich | 2 April 2026 | Ramenzoni, Stefano |

EPO FORM 1503 03.82 (P04C01)

Europäisches
Patentamt

European
Patent Office

Office européen
des brevets

# EUROPEAN SEARCH REPORT

**Application Number**

EP 25 21 5201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | H04L43/08 |
| | | | TECHNICAL FIELDS SEARCHED (IPC) |

The present search report has been drawn up for all claims

| Place of search | Date of completion of the search | Examiner |
|---|---|---|
| Munich | 2 April 2026 | Ramenzoni, Stefano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 5201

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2026

| Patent document cited in search report | Publication date | Patent family member(s) | Publication date |
|---|---|---|---|
| US 2017171046 A1 | 15-06-2017 | EP 3182621 A1 | 21-06-2017 |
| | | US 2017171046 A1 | 15-06-2017 |
| WO 2023175673 A1 | 21-09-2023 | JP 7697585 B2 | 24-06-2025 |
| | | JP WO2023175673 A1 | 21-09-2023 |
| | | US 2025096914 A1 | 20-03-2025 |
| | | WO 2023175673 A1 | 21-09-2023 |
| US 2006252376 A1 | 09-11-2006 | CN 101199194 A | 11-06-2008 |
| | | EP 1875728 A1 | 09-01-2008 |
| | | JP 5265344 B2 | 14-08-2013 |
| | | JP 2008538685 A | 30-10-2008 |
| | | KR 20080005284 A | 10-01-2008 |
| | | TW 200708054 A | 16-02-2007 |
| | | US 2006252376 A1 | 09-11-2006 |
| | | US 2010062724 A1 | 11-03-2010 |
| | | WO 2006116027 A1 | 02-11-2006 |
| US 2022334906 A1 | 20-10-2022 | NONE | |

EPO FORM P0459

For more details about this annex : see Official Journal of the European Patent Office, No. 12/82

**REFERENCES CITED IN THE DESCRIPTION**

**Non-patent literature cited in the description**

- the Infiniband Architecture specification. *Infiniband Architecture Specification*, March 2015, vol. 1